# EUROPEAN PATENT APPLICATION

(11) **EP 3 340 591 A1**
(43) Date of publication of application: **27.06.2018**
(21) Application number: 15901760.7
(22) Date of filing: 19.08.2015
(51) Int. Cl.: H04M 1/725, G06Q 30/06, G04G 21/00

(54) **WATCH-TYPE MOBILE TERMINAL AND METHOD FOR CONTROLLING SAME**

(71) Applicant: LG Electronics Inc., Yeongdeungpo-gu Seoul 07336 (KR)
(72) Inventor: HAN, Dongsu, Seoul 06772 (KR); PARK, Mihyun, Seoul 06772 (KR); SONG, Hyewon, Seoul 06772 (KR)
(74) Representative: Beyer, Andreas
(86) International application number: PCT/KR2015/008660
(87) International publication number: WO 2017/030220

(57) **Abstract**

The present invention relates to a watch-type mobile terminal for controlling in such a manner that payment cards, coupons, membership cards, etc. which are used at the time of payment may be conveniently searched, and a method for controlling the same. In order to achieve the above or other objectives, according to one aspect of the present invention, provided is a watch-type mobile terminal which comprises a display unit; a sensing unit; and a control unit, wherein the control unit senses a first input signal for payment information that is outputted on the display unit, the first input signal being a touch input in which at least one of an area and a pressure sensed at the display unit exceeds a predetermined value; displays an indicator or a predetermined item included in the payment information, according to the first input signal; and enlarges and outputs the predetermined item, according to a second input signal.

## Description

### Technical Field

The present invention relates to a watch-type mobile terminal and a method for controlling the same. More specifically, the present invention relates to a watch-type mobile terminal for controlling payment cards, coupons, membership cards, etc. which are used at the time of payment to be conveniently searched, and a method for controlling the same.

### Background Art

Terminals may be classified into mobile/portable terminals and stationary terminals according to mobility thereof. Mobile terminals may also be classified into handheld terminals and vehicle mounted terminals according to whether a user can directly carry the terminal.

Mobile terminals have become increasingly more functional. Examples of such functions include data and voice communication, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

As the functionality of terminals is diversified, the terminals have been implemented in the form of a multimedia player having complex functions, such as photographing of images and video, playback of music and video files, gaming, and broadcast reception.

To support and improve functionality of the terminals, improvement of structural parts and/or software parts of terminals can be considered.

Meanwhile, when payment is performed using a watch-type mobile terminal, it may be difficult to simultaneously output a payment card, a discount coupon used for payment and a membership card on a display. Furthermore, when multiple coupons are used for payment, it may be inconvenient for a user to select and use a necessary coupon whenever the user performs payment.

### Disclosure

### Technical Problem

An object of the present invention is to solve the aforementioned problem and other problems. Another object of the present invention is to provide a method of easily registering and using coupons necessary for payment in a watch-type mobile terminal.

Still another object of the present invention is to provide a method for easily confirming a receipt after completion of payment in a watch-type mobile terminal.

Yet another object of the present invention is to provide a method for combining a plurality of coupons with one barcode when the plurality of coupons has been registered and performing payment using the barcode in a watch-type mobile terminal.

### Technical Solution

According to an embodiment of the present invention, there is provided a watch-type mobile terminal including: a display; a sensing unit; and a controller, wherein the controller is configured: to sense a first input signal with respect to payment information output on the display, the first input signal being a touch input wherein at least one of an area and a pressure sensed in the display exceeds a predetermined value; to display an indicator on a preset item included in the payment information according to the first input signal; and to zoom in and output the predetermined item according to a second input signal.

According to another embodiment of the present invention, there is provided a watch-type mobile terminal including: a display; a sensing unit; and a controller, wherein the controller is configured: to output a plurality of coupon objects on the display; and to combine barcodes included in the plurality of coupon objects to output a combined barcode according to a first input signal applied to the plurality of coupon objects.

### Advantageous Effects

The watch-type mobile terminal and the method of controlling the same according to the present invention have the following advantages.

According to at least one embodiment of the present invention, a user can easily search for a necessary coupon or card when a plurality of coupons, credit cards and membership cards has been registered.

In addition, according to at least one embodiment of the present invention, a receipt can be easily confirmed after payment.

Furthermore, according to at least one embodiment of the present invention, when a plurality of coupons is simultaneously necessary for payment, the coupons can be combined with one barcode or QR code and easily used.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from the detailed description.

### Description of Drawings

FIG. 1a is a block diagram for describing a mobile terminal related to the present invention.
FIGS. 1b and 1c are conceptual diagrams of an example of the mobile terminal related to the present invention, viewed in different directions.
FIG. 2 is a conceptual diagram for describing another example of a flexible mobile terminal according to the present invention.
FIG. 3 is a perspective view showing an example of a watch-type mobile terminal related to another embodiment of the present invention.
FIG. 4 is a perspective view showing an example of a glasses-type mobile terminal related to another embodiment of the present invention.
FIG. 5 shows an example of a method of registering a coupon in a watch-type mobile terminal according to an embodiment of the present invention.
FIG. 6 shows an example of a method of registering a coupon in a watch-type mobile terminal according to an embodiment of the present invention.
FIG. 7 shows an example of a method of searching for a registered card and coupon in the watch-type mobile terminal according to an embodiment of the present invention.
FIG. 8 shows an example of a method of changing types of cards displayed on a display in the watch-type mobile terminal according to an embodiment of the present invention.
FIG. 9 shows an example of a method of changing types of cards displayed on the display of the watch-type mobile terminal according to an embodiment of the present invention.
FIG. 10 shows an example of a method of simultaneously selecting a payment card and a coupon in the watch-type mobile terminal according to an embodiment of the present invention.
FIG. 11 shows an example of a method of simultaneously selecting a payment card and a coupon in the watch-type mobile terminal according to an embodiment of the present invention.
FIG. 12 shows an example of a method of cancelling a selected card in the watch-type mobile terminal according to an embodiment of the present invention.
FIG. 13 shows an example of pop-up menus displayed when payment is performed in the watch-type mobile terminal according to an embodiment of the present invention.
FIG. 14 shows an example of a method of removing a pop-up menu displayed when payment is performed in the watch-type mobile terminal according to an embodiment of the present invention.
FIG. 15 shows an example of confirming a receipt after completion of payment in the watch-type mobile terminal according to an embodiment of the present invention.
FIG. 16 shows an example of zooming in a payment receipt in the watch-type mobile terminal according to an embodiment of the present invention.
FIG. 17 shows an example of zooming in a payment receipt in the watch-type mobile terminal according to an embodiment of the present invention.
FIG. 18 shows an example of zooming in a payment receipt in the watch-type mobile terminal according to an embodiment of the present invention.
FIG. 19 shows an example of confirming a payment receipt in the watch-type mobile terminal according to an embodiment of the present invention.
FIG. 20 shows an example of zooming in a barcode in the watch-type mobile terminal according to an embodiment of the present invention.
FIG. 21 shows an example of zooming in a barcode in the watch-type mobile terminal according to an embodiment of the present invention.
FIG. 22 shows an example of zooming in a barcode in the watch-type mobile terminal according to an embodiment of the present invention.
FIG. 23 shows an example of automatically outputting coupons at the time of payment in the watch-type mobile terminal according to an embodiment of the present invention.
FIG. 24 shows an example of combining barcodes included in coupons in the watch-type mobile terminal according to an embodiment of the present invention.
FIG. 25 shows an example of using barcodes combined in the embodiment of FIG. 24.
FIG. 26 shows an example of combining barcodes included in coupons in the watch-type mobile terminal according to an embodiment of the present invention.
FIG. 27 shows an example of using barcodes combined in the embodiment of FIG. 26.
FIG. 28 shows an example of zooming in a plurality of barcodes in the watch-type mobile terminal according to an embodiment of the present invention.
FIG. 29 shows an example of zooming in a plurality of barcodes in the watch-type mobile terminal according to an embodiment of the present invention.
FIG. 30 shows an example of combining a plurality of barcodes in the watch-type mobile terminal according to an embodiment of the present invention.
FIG. 31 shows an example of separating barcodes combined in the embodiment of FIG. 30.
FIG. 32 shows an example of deleting some barcodes included in combined barcodes in the watch-type mobile terminal according to an embodiment of the present invention.
FIG. 33 shows an example of selecting a barcode according to an input signal in the watch-type mobile terminal according to an embodiment of the present invention.
FIG. 34 shows an example of deleting some of a plurality of barcodes included in combined barcodes in the watch-type mobile terminal according to an embodiment of the present invention.
FIG. 35 shows an example of combining a plurality of barcodes in the watch-type mobile terminal according to an embodiment of the present invention.
FIG. 36 shows an example of zooming in card numbers at the time of payment in the watch-type mobile terminal according to an embodiment of the present invention.
FIG. 37 shows an example of zooming in a coupon at the time of payment in the watch-type mobile terminal according to an embodiment of the present invention.
FIG. 38 shows an example of cancelling an available coupon at the time of payment in the watch-type mobile terminal according to an embodiment of the present invention.
FIG. 39 shows an example of selecting a coupon to be used for payment in the watch-type mobile terminal according to an embodiment of the present invention.
FIG. 40 shows an example of using a coupon depending on whether a POS terminal is closely located in the watch-type mobile terminal according to an embodiment of the present invention.
FIG. 41 is a flowchart illustrating a method of controlling a watch-type mobile terminal related to the present invention.
FIG. 42 is a flowchart illustrating a method of controlling the watch-type mobile terminal related to the present invention.

### Best Mode

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" or "unit" may be used to refer to elements or components. Use of such a suffix herein is merely intended to facilitate description of the specification, and the suffix itself is not intended to have any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "includes" or "has" are used herein and should be understood that they are intended to indicate existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultrabooks, wearable devices (for example, smart watches, smart glasses, head mounted displays (HMDs)), and the like.

By way of non-limiting example only, further description will be given with reference to particular types of mobile terminals. However, such teachings apply equally to other types of terminals, such as those types noted above. In addition, these teachings may also be applied to stationary terminals such as digital TV, desktop computers, digital signage and the like.

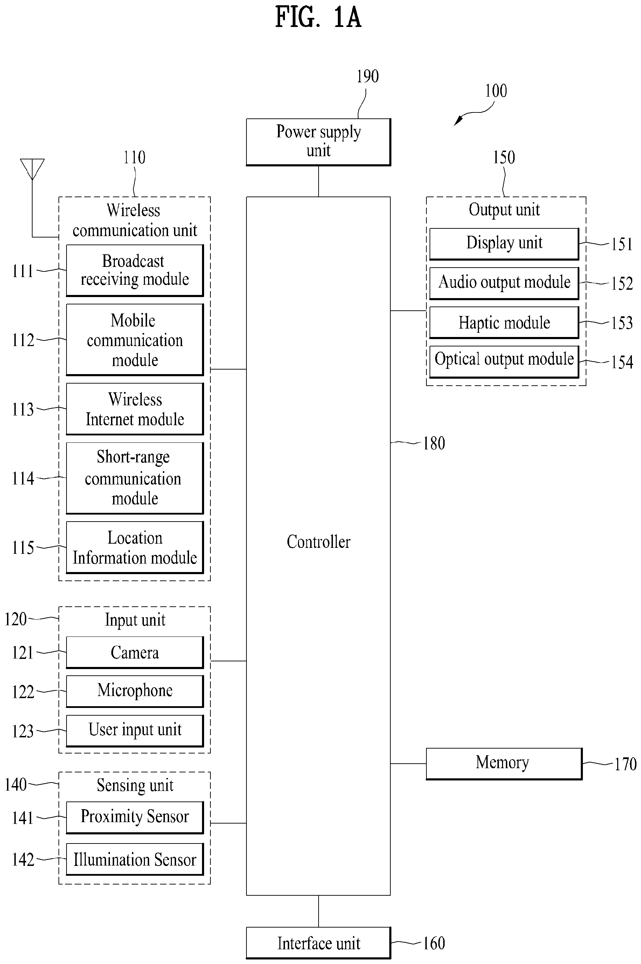

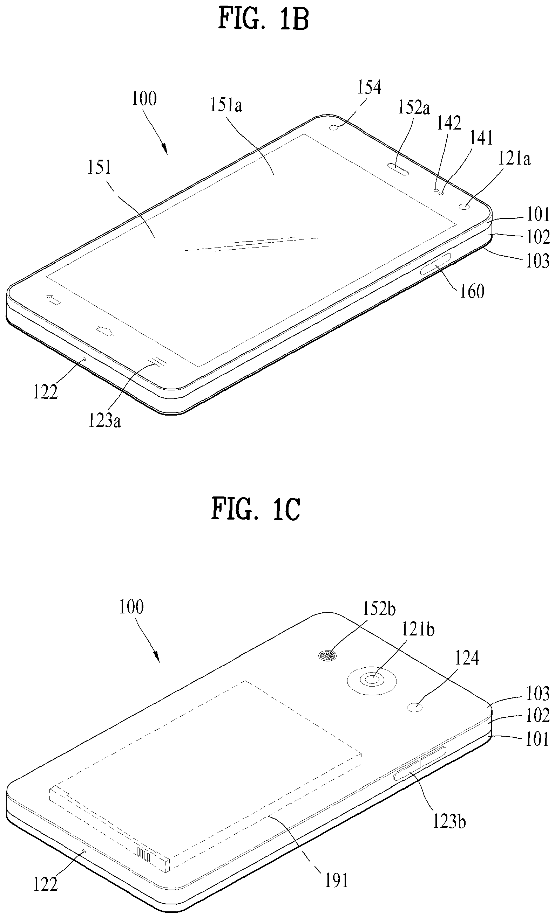

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

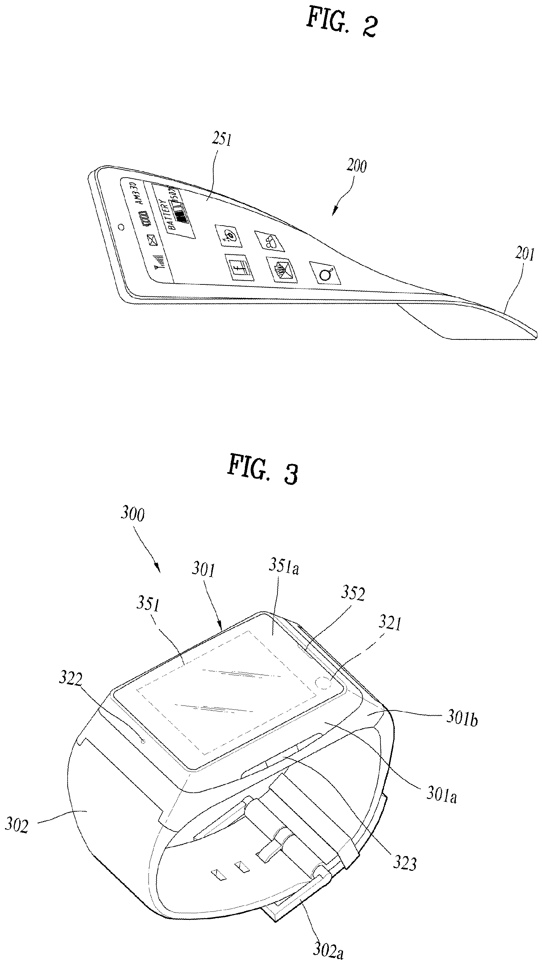

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C.

The flexible display of mobile terminal 200 is generally formed as a lightweight, non-fragile display, which still exhibits characteristics of a conventional flat panel display, but is instead fabricated on a flexible substrate which can be deformed as noted previously.

The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When in a state that the flexible display unit 251 is not deformed (for example, in a state with an infinite radius of curvature and referred to as a first state), a display region of the flexible display unit 251 includes a generally flat surface. When in a state that the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized in such a manner that a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251.

A battery (not shown in this figure) located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 may transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion (not shown) electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

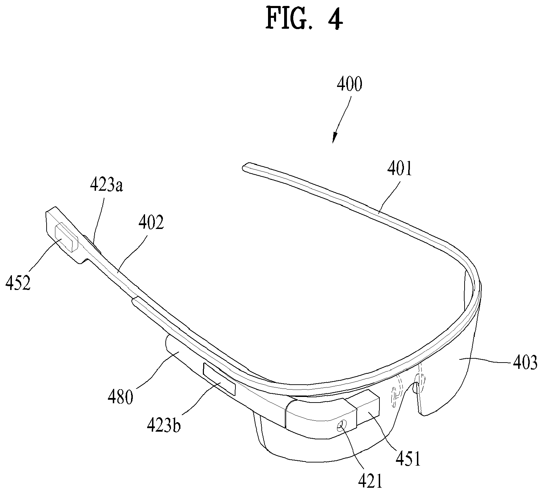

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user.

In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A(Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM(Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omnidirectional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module.

The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI.

Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like.

The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter.

In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB(Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

In a case where the NFC module operates in a card mode, the mobile terminal may transmit card information on a general IC card to the outside. More specifically, if a mobile terminal having card information on a payment card (e.g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this case, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

Hereinafter, embodiments related to control methods which can be implemented in the mobile terminal configured as above will be described with reference to the attached drawings. It is apparent to those skilled in the art that the present invention can be embodied in other specific forms without departing from the spirit and features of the present invention.

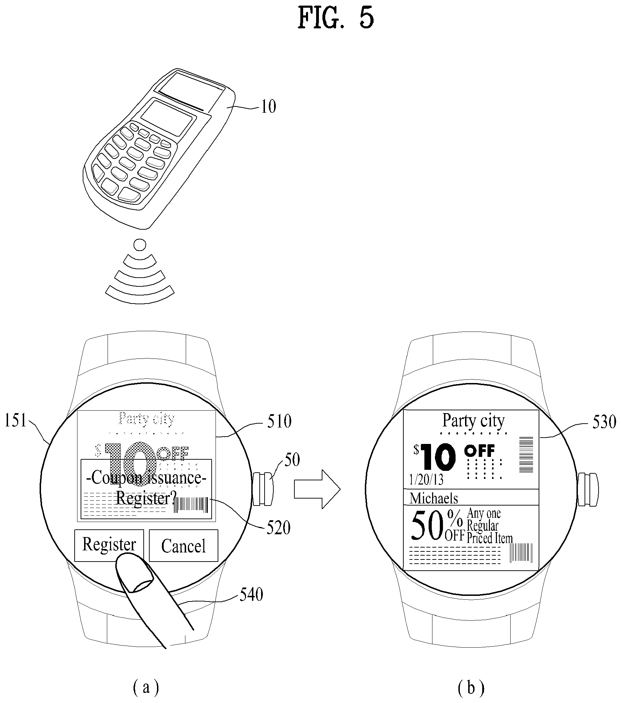

FIGS. 5 to 42 show methods for performing payment and confirming receipts using credit cards, membership cards or coupons registered with a watch-type mobile terminal (referred to as a "mobile terminal" hereinafter). In addition, it is assumed that a mobile terminal is worn by a user in FIGS. 5 to 42. Furthermore, input signals sensed in the present invention may correspond to an input signal applied to a display, an input signal applied to the stem of a watch, and a rotation signal sensed in a mobile terminal.

The mobile terminal shown in FIGS. 5 to 42 may include the stem 50 of a watch. The stem 50 may be provided to one side of the main body of the mobile terminal and may protrude from one side of the main body such that a user can easily rotate the stem. The stem 50 may serve as a search key in the mobile terminal. For example, the stem 50 can be used to search for a plurality of items displayed on the display. In addition, the stem 50 may serve as a selection key in the mobile terminal. For example, when a signal for pressing the stem 50 against the main body of the mobile terminal is sensed, a currently focused item on the display can be selected. Further, the stem 50 may be configured to rotate by a predetermined angle each time or to continuously rotate.

In addition, a coupon object described in embodiments of FIGS. 5 to 42 may indicate a result which corresponds to an actual coupon and is displayed on the display. Furthermore, a card object may indicate a result which corresponds to an actual card and is displayed on the display. Further, the coupon object and the card object may serve as the actual coupon and card. Moreover, a payment card and a credit card have the same meaning in the present invention.

In the embodiments of FIGS. 5 to 42, operations performed in the mobile terminal may be controlled by the controller 180 of FIG. 1a. For convenience, such operations are performed/controlled by the mobile terminal in the following description.

Various embodiments described in the present invention can be implemented independently or in combination.

### Coupon registration

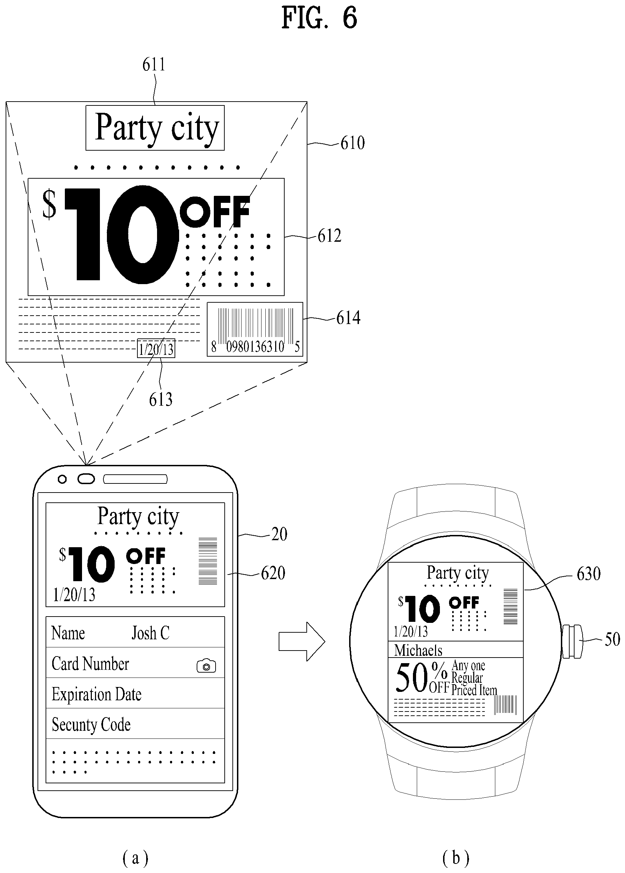

To use a coupon when payment is performed through the mobile terminal, a process of registering the coupon with the mobile terminal may be required first. A method of registering a coupon will be described with reference to FIGS. 5 and 6. Here, coupons may include various coupons such as a discount coupon, a saving coupon and a free coupon.

FIG. 5 shows an example of a method of registering a coupon in a watch-type mobile terminal according to an embodiment of the present invention. More specifically, FIG. 5 shows a method of registering an electronic coupon when the mobile terminal is located in proximity to a POS terminal or in a coupon-issuing store.

First, the mobile terminal may output a registerable coupon object 510 on the display 151. For example, the coupon object can be output when a payment signal is received form a POS 10. In addition, when the mobile terminal is located in a coupon-issuing store, a registrable coupon may be output on the display on the basis of the position of the store.

In this case, the mobile terminal may output a menu option 520 for determining whether to register the output coupon, as shown in FIG. 5(a). In addition, the mobile terminal may sense an input signal 540 applied to the menu option 520. For example, the input signal may include a short touch signal, a long touch signal or the like.

Further, the mobile terminal may register the registerable coupon with the mobile terminal according to the input signal. For example, the mobile terminal can register or store the registerable coupon object 510 with or in a coupon associated application 530. Accordingly, the mobile terminal can simultaneously display a plurality of coupons registered with the coupon associated application 530.

FIG. 6 shows an example of the method of registering a coupon in the watch-type mobile terminal according to an embodiment of the present invention. More specifically, FIG. 5 shows a method of registering a paper coupon through a camera in an external device connected to the mobile terminal.

First, the mobile terminal may perform pairing with an external device. For example, the external device 20 may correspond to a smartphone having a camera. Further, the external device may execute the camera to recognize a paper coupon 610 located within a viewing angle area.

In general, coupons may be provided in various output forms according to issuance companies and types distinguished from credit cards or membership cards. Accordingly, the external device 20 may extract only predetermined information among various types of information included in the coupon or only information selected by a user.

For example, the external device 20 can selectively recognize and store only information necessary to use the coupon among various types of information displayed on the paper coupon 610. That is, information necessary to use the coupon may include a coupon name 611, a coupon discount rate 612, a coupon usage period 613, a barcode 614 of the coupon, etc., as shown in FIG. 6(a).

In addition, the external device 20 may additionally register additional information other than the information recognized from the coupon according to a sensed input signal. For example, the additional information may correspond to a notification for inducing the user to use the coupon on a date at which the coupon can be used and a place in which the coupon can be used.

Furthermore, the external device 20 may store or register information necessary to use the recognized coupon. Referring to FIG. 6(a), the external device 20 can register or store information recognized from the paper coupon 610 in a coupon application 620.

Meanwhile, the mobile terminal and the external device 20 are connected through Bluetooth or the like, and thus the mobile terminal can confirm the paper coupon 630 registered with the external device 20.

### Search for registered card and coupon

When credit cards, coupons and the like have been registered with the mobile terminal, the user can search for a card and a coupon necessary for payment. Various methods for searching for cards and coupons will be described.

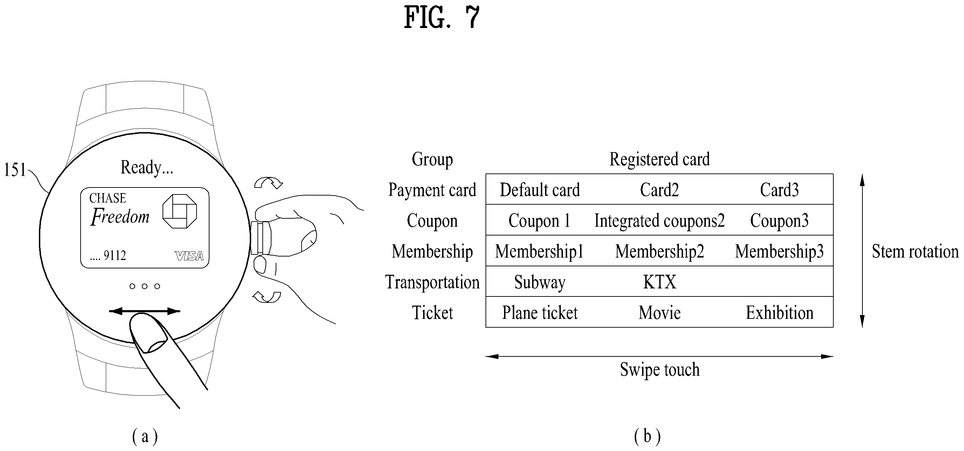

FIG. 7 shows an example of a method for searching for registered cards and coupons in the watch-type mobile terminal according to an embodiment of the present invention.

Referring to FIG. 7(a), when a card payment application is executed, the mobile terminal may output a default card object. For example, the default card object may correspond to a preset card which is mainly used by the user for payment.

Referring to FIG. 7(b), when an input signal applied to the display 151 or the stem 50 is sensed, the mobile terminal may change types of displayed cards or coupons. For example, card or coupon types may include a credit card, a coupon, a membership card, a transportation card, a ticket, etc.

As an example, the mobile terminal can change a group including cards or coupons when an input signal of rotating the stem is sensed. As another example, the mobile terminal can change card or coupon types in the same group when swipe touch applied to the display is sensed.

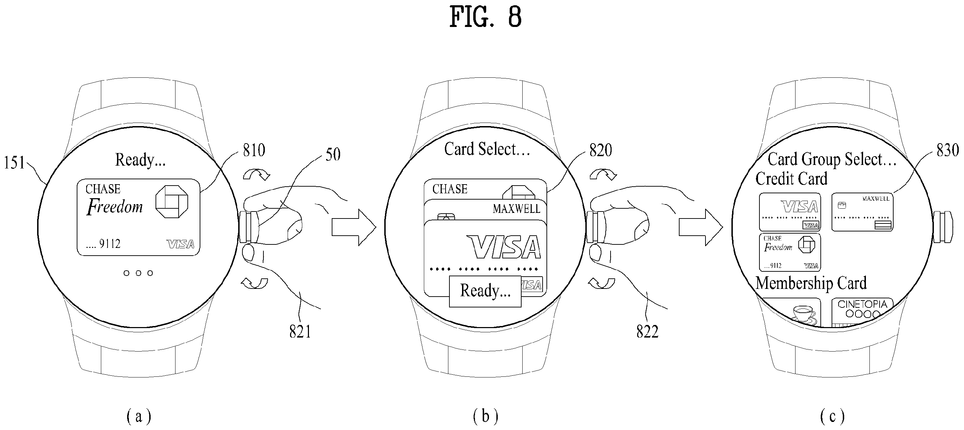

FIG. 8 shows an example of a method of changing types of cards output on the display in the watch-type mobile terminal according to an embodiment of the present invention.

Referring to FIG. 8(a), when the card payment application is executed, the mobile terminal may output a default card object 810. For example, the default card object 810 may correspond to a credit card for payment. Here, the user may want to use a payment card or coupon other than the default card object 810 output on the display 151.

In this case, the mobile terminal may sense a first input signal 821 applied to the stem 50. Here, the first input signal 821 may correspond to a signal of rotating the stem in one direction. One direction may correspond to a direction of the outside or inside of the mobile terminal.

The mobile terminal may output other credit card objects 820 for payment on the display 151 according to the first input signal 821. That is, the mobile terminal can provide other cards which can be used for payment in addition to default cards to the user in response to the first input signal 821. Accordingly, the user can select a desired card from the output credit cards and use the selected card for payment.

In addition, the mobile terminal may sense a second input signal 822 applied to the stem 50 in a state in which a plurality of credit card objects is output. Here, the second input signal 822 may correspond to a signal of rotating the stem in one direction. For example, the direction of the second input signal 822 may be the same as the direction of the first input signal 821.

In this case, the mobile terminal may output a plurality of card groups 830 on the display according to the second input signal 822. For example, the plurality of card groups 830 may include credit cards, coupons, membership cards, etc. Accordingly, the user can easily select a desired card group from the plurality of card groups 830 output on the display 151.

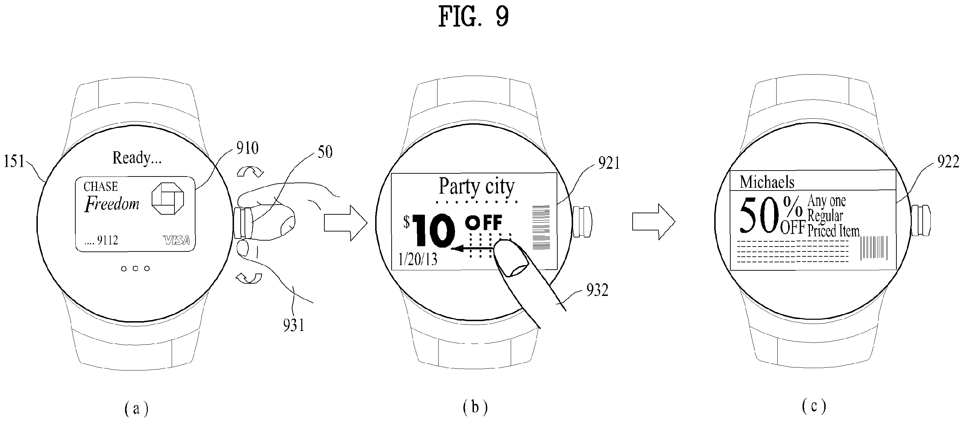

FIG. 9 shows an example of a method of changing types of cards output on the display in the watch-type mobile terminal according to an embodiment of the present invention.

More specifically, FIG. 9 shows a method of changing card groups and outputting another card group according to a sensed input signal in a state in which a payment card is output on the display.

Referring to FIG. 9(a), the mobile terminal may output a default card object 910 in a state in which the card payment application is executed. Here, the user may want to use a card object in a group different from the default card object 910 output on the display 151. For example, the card in a different group may be a membership card, a coupon or the like.

In this case, the mobile terminal may sense a first input signal 931 applied to the stem 50. Here, the first input signal 931 may correspond to a signal of rotating the stem in one direction. Further, the mobile terminal may output a card in a group different from the currently output card on the display 151. That is, the input signal applied to the stem 50 may correspond to a signal for changing card groups. In the embodiment of FIG. 9(b), the mobile terminal may output a first coupon object 921, which is not a payment card, on the display 151 according to the first input signal 931.

In the embodiment of FIG. 9(b), when an additional input signal applied to the stem 50 is sensed, which is not shown in FIG. 9(b), the mobile terminal may output a card in a group different from the currently output coupon group.

Here, the mobile terminal may sense a second input signal 932 applied to the display 151. The second input signal 932 may correspond to drag touch input or flicking touch input in one direction. In this case, the mobile terminal may remove the first coupon object 921 output on the display 151 and output a second coupon object 922, as shown in FIG. 9(c). Accordingly, the user can easily select and use a card in a group different from the card output on the display 151.

Meanwhile, the first and second input signals are not limited to the aforementioned signals and may be replaced by other types of input signals.

### Simultaneous output of payment card and coupon

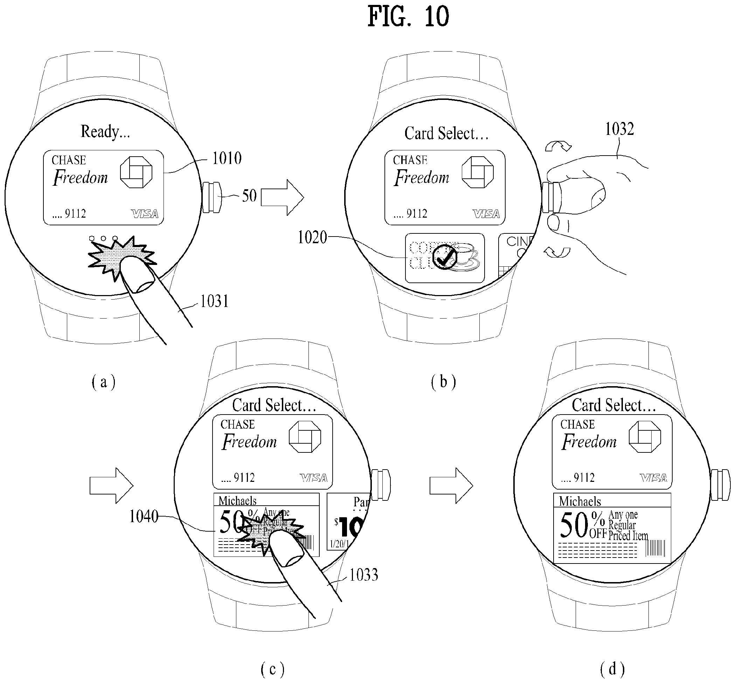

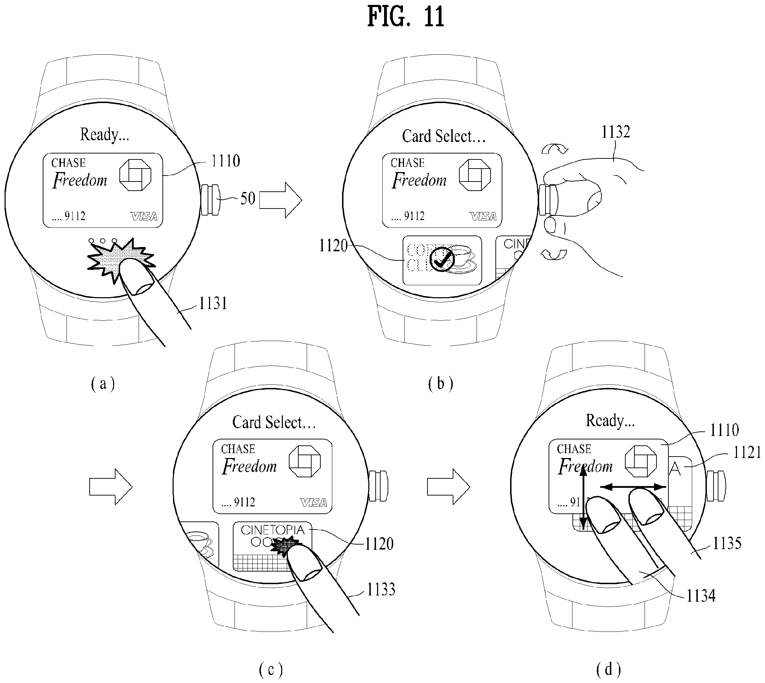

FIGS. 10 and 11A show methods of simultaneously outputting a payment card and a coupon on the display.

In the present embodiment, touch input signals applied to the display 151 may be classified into first touch and second touch. For example, the first touch may correspond to short touch input and the second touch may correspond to long touch input. Further, the first touch may correspond to touch input slightly applied by a user's hand and the second touch may correspond to touch input strongly applied by a user's hand. Here, it is assumed that long touch input and strong touch input correspond to different touch inputs. That is, long touch input may correspond to slight touch input maintained for a long time, and the strong touch input may correspond to strong touch maintained for a short time.

The area of the first touch and the area of the second touch sensed in the display 151 may differ from each other. In addition, the pressure of the first touch and the pressure of the second touch sensed in the display 151 may differ from each other. In the embodiment of FIG. 10, it is assumed that the first touch and the second touch are input signals wherein areas and/or pressures sensed in the display 151 differ from each other. Furthermore, the second touch may correspond to an input signal wherein at least one of the pressure and area sensed in the display 151 is greater than a preset value.

FIG. 10 shows an example of simultaneously selecting a payment card and a coupon in the watch-type mobile terminal according to an embodiment of the present invention.

Referring to FIG. 10(a), the mobile terminal may output a default card object 1010 when the card payment application is executed. Here, the default card object 1010 may correspond to a credit card for payment. Here, the user may want to simultaneously output the credit card and a coupon for discounting a payment amount or a membership card for saving points corresponding to the payment amount.

Accordingly, the mobile terminal may sense a first input signal 1031 from the user. Here, the first input signal 1031 may correspond to touch input applied to the display. For example, the first input signal 1031 may correspond to the second touch wherein at least one of the pressure and area sensed in the display 151 is relatively large. In addition, the first input signal 1031 may correspond to touch input applied to the lower part of the display. For example, the lower part of the display may correspond to a region other than the region in which the default card object 1010 is output on the display. The first input signal is not limited thereto and may be replaced by other types of input signals.

In this case, the mobile terminal may output a card object 1020 belonging to a first group different from the default card object 1010 on the lower part of the display according to the first input signal 1031. That is, in the present embodiment, the mobile terminal simultaneously outputs the default card object 1010 which is a payment card and a card object in a different group. For example, the first group may correspond to a group including membership cards. Further, the card object 1020 belonging to the first group may be displayed as if it comes up from the lower end of the display.

Referring to FIG. 10(b), the mobile terminal may sense a second input signal 1032 applied to the stem 50. Here, the second input signal 1032 may correspond to a signal of rotating the stem 50 in one direction. The second input signal is not limited thereto and may be replaced by other types of input signals. Referring to FIG. 10(c), the mobile terminal may remove the card object 1020 belonging to the first group from the lower part of the display and output a card object 1040 belonging to a second group. For example, the second group may be a group including coupons.

Here, the mobile terminal may output a card other than the card object 1040 belonging to the second group on the display upon sensing flicking touch input or drag touch input in the left direction or right direction, which is not shown in FIG. 10(c).

Subsequently, the mobile terminal may sense a third input signal 1033 applied to the card object 1040 belong to the second group. Here, the third input signal may correspond to the second touch wherein at least one of the area and pressure sensed in the display is relatively large. The third input signal is not limited thereto and may be replaced by other types of input signals. In this case, the mobile terminal may select the card object 1040 belonging to the second group and output on the lower part of the display. That is, the mobile terminal can output a screen on which a selected credit card and coupon to be used for payment are displayed, as shown in FIG. 10(d).

When a card to be used for payment is additionally selected in addition to the credit card and coupon objects, which is not shown in FIG. 10(d), the mobile terminal cannot simultaneously output the credit card, the coupon and the additional card because the area of the display is small. In this case, the mobile terminal may additionally output a card in addition to the credit card and coupon objects upon sensing an input signal applied to the stem 50.

FIG. 11 shows an example of simultaneously selecting a payment card and a coupon in the watch-type mobile terminal according to an embodiment of the present invention. Description of redundant parts in the embodiments of FIG. 10 and FIG. 11 is omitted.

Referring to FIG. 11(a), when the card payment application is executed, the mobile terminal may output a default card object 1110. Then, the mobile terminal may sense a first input signal 1131. Here, the first input signal 1131 may correspond to the second touch wherein at least one of the area and pressure sensed in the display is relatively large. In this case, the mobile terminal may output a card object 1120 belonging to a group different from the default card object 1110 on the lower part of the display according to the first input signal 1110, as shown in FIG. 11(b). For example, the card object 1120 belonging to a group different from the default card object 1110 may correspond to a membership card.

Referring to FIG. 11(b), the mobile terminal may sense a second input signal 1132 applied to the stem 50. Here, the second input signal 1132 may correspond to a signal for searching for a plurality of cards belonging to a membership card group. Referring to FIG. 11(c), the mobile terminal may output a card object 1121 belonging to the membership card group on the lower part of the display according to the second input signal 1132.

Subsequently, the mobile terminal may select the default card and the card object 1121. As an example, the mobile terminal can select the default card object and the card object 1121 when a third input signal 1133 applied to the lower part of the display is sensed. Here, the third input signal 1133 may correspond to the first touch wherein at least one of the area and pressure sensed in the display is relatively small. As another example, the mobile terminal may select the default card object and the card object 1121 after the lapse of a predetermined time from when the default card object and the card object 1121 are output.

The mobile terminal may output the default card object 1110 and the membership card object 1121 by applying priority thereto upon determination of the default card object 1110 and the membership card object 1121. FIG. 11(d) shows a state in which the membership card object 1121 is overlaid with the default card object 1110. In this case, the default card object 1110 has higher priority than the membership card object 1121. Here, the mobile terminal may sense a fourth input signal 1134. For example, the fourth input signal 1134 may correspond to upward or downward drag touch input or flicking touch input. Further, the fourth input signal 1134 may correspond to an input of rotating the stem 50 in one direction. In this case, the mobile terminal can output the membership card object 1121 overlying the default card object 1110, which is not shown in FIG. 11.

In addition, the mobile terminal may sense a fifth input signal 1135 upon determination of the default card object 1110 and the membership card object 1121. For example, the fifth input signal 1135 may correspond to drag touch input or flicking touch input in the left or right direction. In this case, the mobile terminal may remove the default card object 1110 which is a credit card for payment and output another credit card object. Here, when the credit card object displayed on the upper part of the display is changed, the membership card displayed on the lower part of the display may be removed. The first to fifth input signals are not limited to the aforementioned signals and may be replaced by other types of input signals.

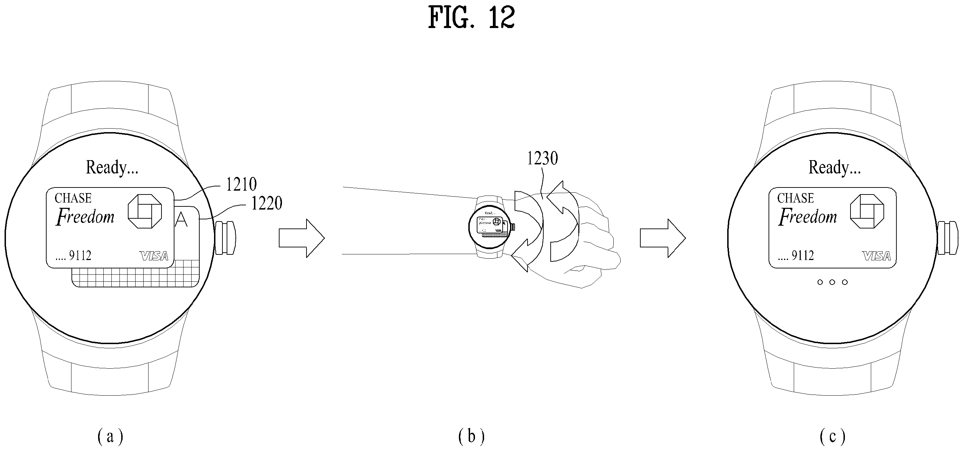

FIG. 12 shows an example of cancelling a selected card in the watch-type mobile terminal according to an embodiment of the present invention.

Referring to FIG. 12(a), the mobile terminal may simultaneously output a selected credit card object 1210 and membership card object 1220 on the display. This operation is the same as that described in FIG. 11. Here, the user may want to simultaneously cancel the selected credit card object 1210 and membership card object 1220.

In this regard, the mobile terminal may sense an input signal 1230, as shown in FIG. 12(b). The input signal 1230 may correspond to a signal of rotating the mobile terminal to the left and right. That is, the input signal may correspond to an action of the user shaking a wrist wearing the mobile terminal. For example, the input signal 1230 may correspond to a signal of rotating the mobile terminal to the left and right three times. However, the input signal 1230 is not limited thereto.

Referring to FIG. 12(c), the mobile terminal may switch to the initial screen of the payment application according to the input signal 1230. That is, the mobile terminal can output a default card object 1240 on the display.

### Pop-up menu for setting payment

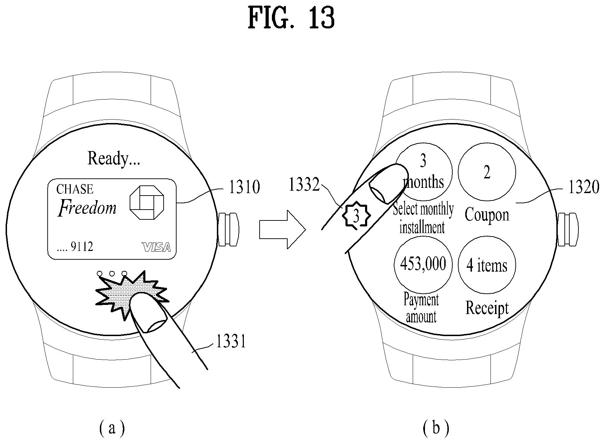

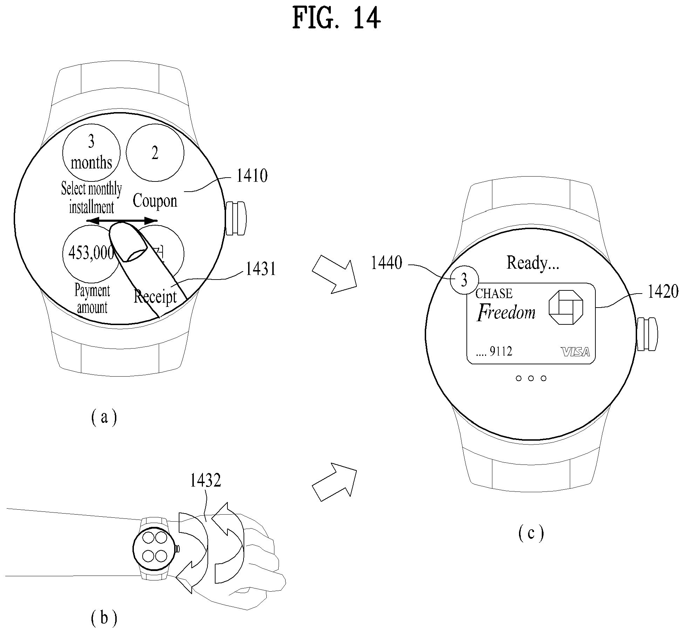

When payment is performed using a payment card registered with the mobile terminal, it is necessary to check details related to payment. FIGS. 13 and 14 show methods of setting various conditions for payment when payment is performed through a credit card in the payment application.

FIG. 13 shows an example of a pop-up menu displayed during payment in the watch-type mobile terminal according to an embodiment of the present invention.

Referring to FIG. 13(a), the mobile terminal may sense a first input signal 1331 upon determination of a credit card for payment. Here, the first input signal may correspond to touch wherein at least one of the area and pressure sensed in the display is relatively large, as described in FIGS. 10 and 11. The first input signal is not limited thereto and may be replaced by a different type of input signal.

In this case, the mobile terminal may output a pop-up menu 1320 in an overlay manner in a state in which the credit card for payment is output, as shown in FIG. 13(b). Here, the pop-up menu 1320 may correspond to a pop-up for setting sub-menus related to payment using a credit card 1310. For example, the menu option 1320 may include an installment selection menu, a coupon menu, a payment amount menu and a receipt menu as sub-menus. In addition, upon sensing an input signal applied to each sub-menu of the menu option 1320, the mobile terminal may set the corresponding sub-menu.

As an example, the installment selection menu may correspond to a menu for setting installments of a payment amount. For example, upon sensing an input signal 1332 applied to the installment selection menu, as shown in FIG. 13(b), the mobile terminal can set the number of months for installment. For example, the input signal 1332 may correspond to three consecutive short touch inputs. In this case, the mobile terminal can set the number of months for installment to 3. That is, the mobile terminal can increase the number of months for installment as the number of touches applied to the installment selection menu increases.

As another example, the coupon menu may correspond to a menu for indicating coupons which can be used in a place where the user currently performs payment. For example, the mobile terminal can check available coupons upon sensing an input signal applied to the coupon menu, which is not shown in FIG. 13.

As another example, the payment amount menu may indicate a cumulative amount paid in the corresponding month or an amount paid last month with the credit card 1310. Here, when a card payment amount limit is set, the mobile terminal may display the payment amount menu in various colors for respective payment amounts. For example, when the card payment amount limit is set to 600,000 won, the mobile terminal may display the payment amount menu in red if a payment amount exceeds 600,000 won. In addition, the mobile terminal may display the payment amount menu in orange if a payment amount exceeds 300,000 won and display the payment amount menu in green if the payment amount does not exceed 300,000 won.

As another example, the receipt menu may indicate the details of payment using the credit card 1310. For example, the mobile terminal can indicate the number of payments using the credit card 1310 in the corresponding month through the pop-up menu 1320. In addition, the mobile terminal may display details of receipts with respect to payment in the corresponding month upon sensing an input signal applied to the receipt menu, which is not shown in FIG. 13.

The sub-menus included in the pop-up menu 1320 are not limited to the embodiment of FIG. 13 and may include various sub-menus related to payment.

FIG. 14 shows an example of removing a pop-up menu displayed during payment in the watch-type mobile terminal according to an embodiment of the present invention.

Referring to FIG. 14(a), the mobile terminal may output a pop-up menu 1410 for setting payment on the display. Here, the mobile terminal may check or set sub-menus through an input signal applied to the pop-up menu 1410, as described above in FIG. 13. Then, the user may intend to perform payment using a credit card after setting or checking items of the pop-up menu 1410.

Accordingly, the mobile terminal may sense input signals. For example, an input signal 1431 may correspond to drag touch input or flicking touch input in the left or right direction for the display, as shown in FIG. 14(a). As another example, an input signal 1432 may correspond to an input of rotating the display to the left or right, as shown in FIG. 14(b). That is, the input signal 1432 may correspond to an action of the user shaking a wrist wearing the mobile terminal to the left and right. The input signals are not limited thereto and may be replaced by other types of input signals.

In this case, the pop-up menu 1410 displayed on the display may be removed and a credit card 1420 for payment may be output according to a sensed input signal. The mobile terminal may display the number of months for installment set through the pop-up menu 1410 on the credit card object 1420 in an overlay manner. That is, the mobile terminal can also output contents set through the pop-up menu 1410 on the default payment screen.

Although not shown in FIGS. 13 and 14, the mobile terminal may set a sub-menu such as the number of months for installment without using the pop-up menu. For example, the mobile terminal may sense an input signal applied to the stem in a state in which a credit card for payment is displayed on the display. For example, the mobile may increase the number of months for installment with respect to a payment amount upon sensing an input of rotating the stem clockwise. In addition, the mobile may decrease the number of months for installment with respect to a payment amount upon sensing an input of rotating the stem counterclockwise. Further, the speed of increasing/decreasing the number of months for installment with respect to a payment amount may increase as the rotation speed of the stem increases. Moreover, when the number of months for installment with respect to a payment amount is changed, the mobile terminal may output the change in the number of months for installment on the credit card for payment in an overlay manner.

### Payment receipt confirmation

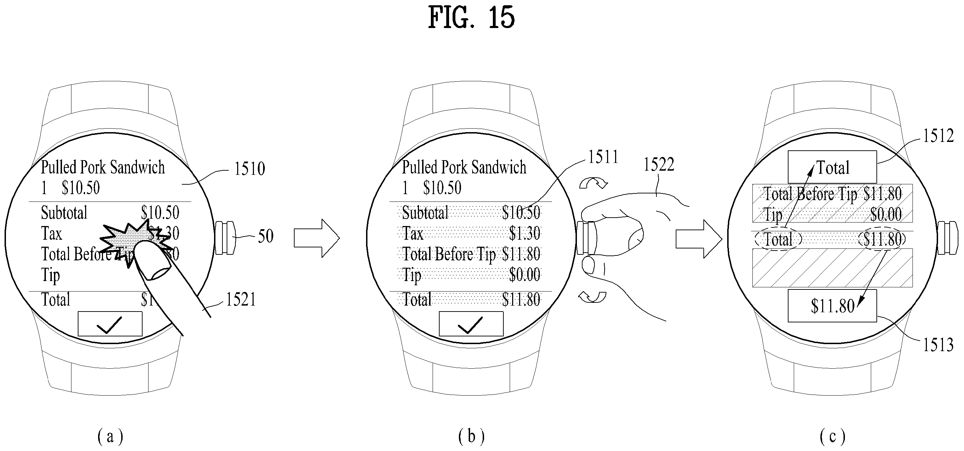

The user may want to confirm details of payment after payment using a payment card registered with the mobile terminal. FIGS. 15 to 19 show various methods for confirming a payment receipt after completion of payment.

FIG. 15 shows an example of confirming a receipt after completion of payment in the watch-type mobile terminal according to an embodiment of the present invention.

Referring to FIG. 15(a), the mobile terminal may output a receipt object 1510 indicating the details of payment. For example, the mobile terminal may output the receipt object 1510 on the display upon sensing an input signal applied to the receipt menu in the pop-up menu described above with reference to FIGS. 13 and 14. In addition, the mobile terminal may sense a first input signal 1521 applied to the receipt object 1510. Here, the first input signal may correspond to the second touch wherein at least one of the area and pressure sensed in the display is greater than a preset value. The first input signal is not limited thereto and may be replaced by a different type of input signal.

Referring to FIG. 15(b), the mobile terminal may display an indicator 1511 on main items of the receipt object according to the first input signal 1510. For example, the indicator 1511 may correspond to change of the color of parts of the receipt object 1510 which correspond to main items. Main items in the receipt object 1510 may correspond to text based details and amount based details. For example, main items in the receipt object 1510 may correspond to payment items and count items.

Subsequently, the mobile terminal may sense a second input signal 1522 applied to the stem 50 in a state in which the indicator 1511 for main items of the receipt object is displayed. Here, the second input signal 1522 may correspond to a signal of rotating the stem 50 clockwise. The second input signal is not limited thereto and may be replaced by a different type of input signal.

In this case, the mobile terminal may zoom in regions corresponding to the main items and sequentially display the regions on the display. Here, the mobile terminal may automatically designate the order of output of main items according to importance levels. For example, the mobile terminal can output a text item 1512 and an amount item 1513 with respect to the total amount having a high importance level in the receipt object, as shown in FIG. 15(c).

Furthermore, although not shown in FIG. 15, the mobile terminal may sequentially zoom in the remaining main items shown in FIG. 15(b) upon sensing an additional signal of rotating the stem clockwise.

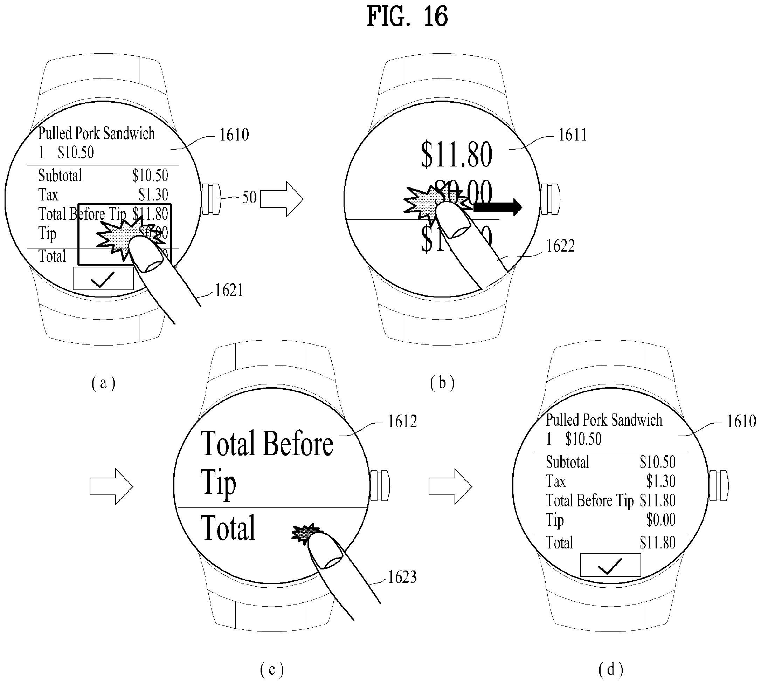

FIG. 16 shows an example of zooming in a payment receipt in the watch-type mobile terminal according to an embodiment of the present invention.

Referring to FIG. 16(a), the mobile terminal may output a receipt object 1610 indicating the details of payment. Here, the mobile terminal may sense a first input signal 1621 applied to the receipt object 1610. The first input signal 1621 may correspond to the second touch wherein at least one of the area and pressure sensed in the display is greater than a preset value. In addition, the position at which the first input signal 1621 is sensed may correspond to a region of the receipt object 1610 in which a total amount is indicated. The first input signal is not limited thereto and may be replaced by a different type of input signal.

In this case, the mobile terminal may zoom in a region 1611 of the receipt object 1610 and output the region 1611 according to the first input signal 1621, as shown in FIG. 16(b). That is, the mobile terminal may provide a zoom-in view of the receipt. For example, the zoom-in region of the receipt object 1610 may correspond to a region in which the first input signal 1621 is sensed. That is, the user can easily confirm an amount in a state in which the region to which the input signal is applied in the receipt is zoomed in. Here, since only the amount is zoomed in and output in the embodiment of FIG. 16(b), the user may want to confirm text items corresponding to the amount.

In this case, the mobile terminal may sense a second input signal 1622 applied to the display, as shown in FIG. 16(b). Here, the second input signal 1622 may correspond to drag (flicking) touch input in the left or right direction. In addition, at least one of the sensed area and pressure of the second input signal 1622 may be the same as that of the first input signal 1622. In addition, the mobile terminal may output a text item 1612 according to the second input signal 1622. Here, the text item 1612 may correspond to an item located in the left of the region in which the amount item 1611 is positioned. The second input signal is not limited to the aforementioned signal and may be replaced by a different type of input signal.

Although not shown in FIG. 16, the mobile terminal may sense drag (flicking) touch input applied to the display upward or to the right. In this case, the mobile terminal may zoom in an item positioned at the top or right of a region of the receipt object 1610 and output the zoomed in item.

Referring to FIG. 16(c), the mobile terminal may sense a third input signal 1623 applied to the display. Here, the third input signal 1623 may correspond to the first touch described above in the embodiments of FIGS. 10 and 11. The third input signal is not limited thereto and may be replaced by a different type of input signal. In this case, the mobile terminal may end the zoom-in view of the receipt and return to the normal view 1610 of the receipt according to the third input signal 1623.

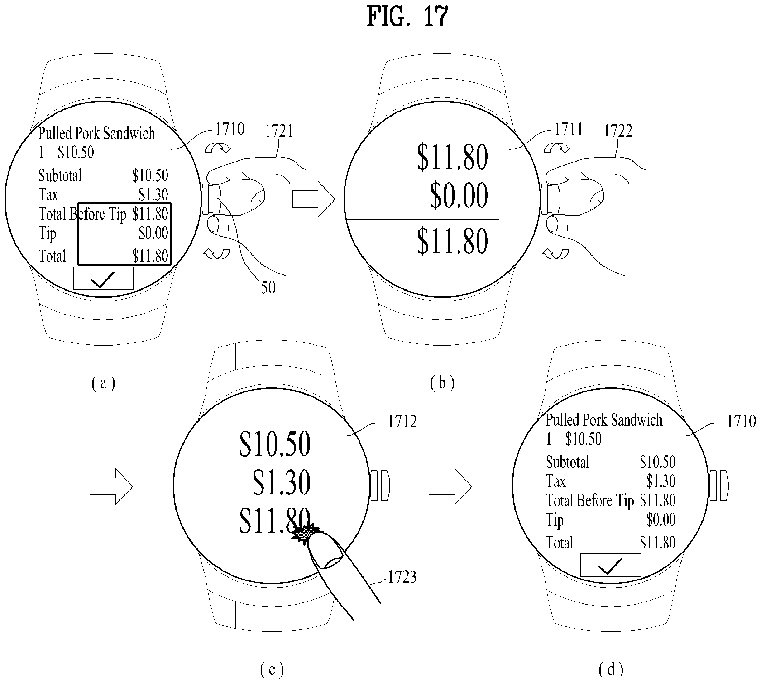

FIG. 17 shows an example of zooming in a payment receipt in the watch-type mobile terminal according to an embodiment of the present invention.

Referring to FIG. 17(a), the mobile terminal may output a receipt object 1710 indicating the details of payment. Here, the mobile terminal may sense a first input signal 1721. The first input signal 1721 may correspond to a signal of rotating the stem 50 clockwise. The first input signal is not limited thereto and may be replaced by a different type of input signal.

In this case, the mobile terminal may provide a zoom-in view of the receipt object 1710 according to the first input signal 1721, as shown in FIG. 17(b). More specifically, the mobile terminal may provide a zoom-in view of a region 1711 of the receipt object 1710. Here, the region 1711 for which a zoom-in view is provided may be preset in the mobile terminal. For example, the region 1711 for which a zoom-in view is provided may correspond to a total amount.

In addition, the mobile terminal may sense a second input signal 1722. Here, the second input signal 1722 may correspond to a signal of rotating the stem 50 clockwise. For example, the mobile terminal may provide a zoom-in view of an item 1712 positioned above the total amount in the receipt object 1710 when the second input signal 1722 corresponds to a signal of rotating the stem 50 clockwise. As another example, the mobile terminal may provide a zoom-in view of an item (not shown) positioned beneath the total amount in the receipt object 1710 when the second input signal 1722 corresponds to a signal of rotating the stem 50 counterclockwise. The second input signal is not limited thereto and may be replaced by a different type of input signal.

Although not shown in FIG. 17, the second input signal may correspond to drag (flicking) touch input applied to the display. For example, when the second input signal is drag (flicking) touch input in the left direction, the mobile terminal may provide a zoom-in view of an item positioned on the left of the total amount in the receipt object 1710.

Referring to FIG. 17(c), the mobile terminal may sense a third input signal 1723 applied to the display. Here, the third input signal 1723 may correspond to the first touch described above with reference to FIGS. 10 and 11. In this case, the mobile terminal may end the zoom-in view of the receipt object and return to the normal view 1710 of the receipt object according to the third input signal 1723.

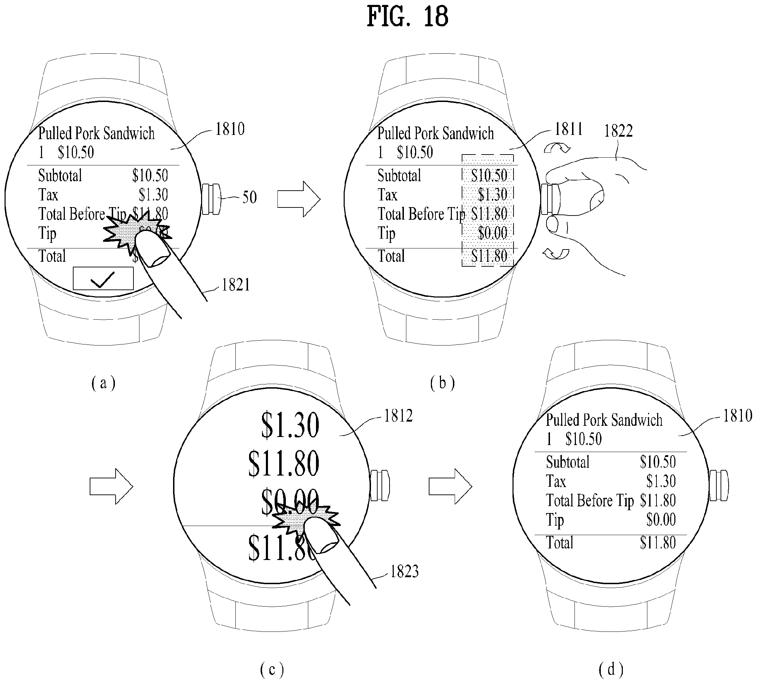

FIG. 18 shows an example of zooming in a payment receipt in the watch-type mobile terminal according to an embodiment of the present invention.

Referring to FIG. 18(a), the mobile terminal may output a receipt object 1810 indicating the details of payment. Here, the mobile terminal may sense a first input signal 1821 applied to the receipt object 1810. The first input signal 1721 may correspond to the second touch described above in the embodiments of FIGS. 10 and 11. The first input signal is not limited thereto and may be replaced by a different type of input signal.

In this case, the mobile terminal may display an indicator 1811 in preset regions of the receipt object 1810 according to the first input signal 1821, as shown in FIG. 18(b). Here, the preset regions may correspond to amount items. Further, the mobile terminal may sense a second input signal 1822. Here, the second input signal 1822 may correspond to a signal of rotating the stem 50 clockwise. The second input signal is not limited thereto and may be replaced by a different type of input signal.

In this case, the mobile terminal may provide a zoom-in view 1812 of the preset regions, as shown in FIG. 18(c), since the user normally confirms the amount first through the receipt. Although not shown in FIG. 18, when all the preset regions are not simultaneously displayed on the display, the mobile terminal may output remaining items according to a signal sensed through the stem 50.

Subsequently, the mobile terminal may sense a third input signal 1823 applied to the zoom-in view 1812. Here, the third input signal 1823 may correspond to the second touch described above in the embodiments of the FIGS. 10 and 11. In this case, the mobile terminal may end the zoom-in view 1812 and provide the normal view of the receipt object 1810 according to the third input signal 1823.

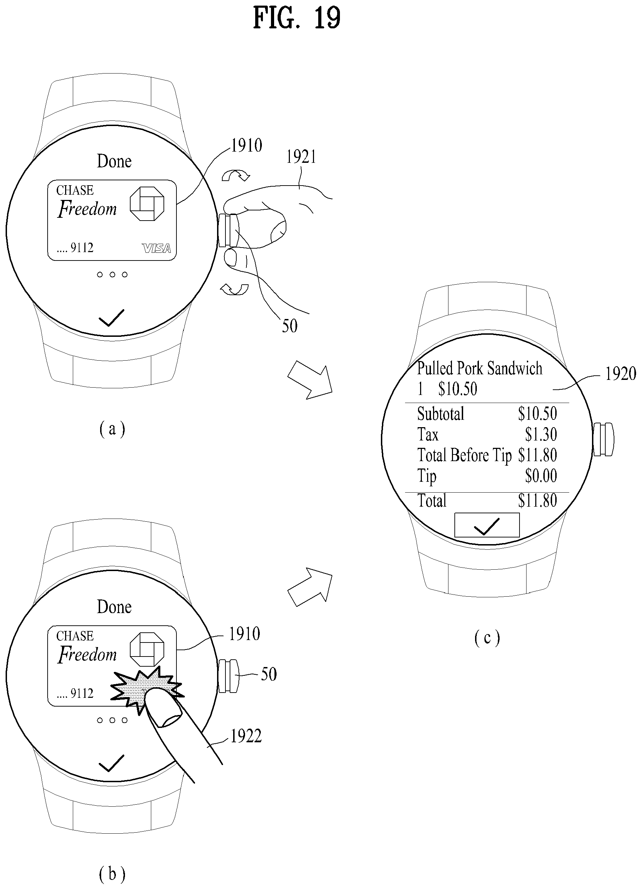

FIG. 19 shows an example of confirming a payment receipt in the watch-type mobile terminal according to an embodiment of the present invention.

Referring to FIG. 19(a), the mobile terminal may output a default card object 1910 in a state in which the payment application is executed. The default card object 1910 may correspond to a credit card used for payment. Here, the user may want to confirm a receipt of payment using the default card object 1910. In this regard, the mobile terminal displays the pop-up menu, and when an input signal applied to the receipt menu of the pop-up menu is sensed, displays the receipt in FIGS. 13 and 14. The embodiment of FIG. 19 provides a method of easily confirming a receipt, distinguished from the embodiments of FIGS. 13 and 14.

Referring to FIG. 19(a), the mobile terminal may sense a signal 1921 of rotating the stem 50 in one direction. Here, one direction may correspond to clockwise or counterclockwise. In this case, the mobile terminal may output a receipt object 1920 with respect to previous payment using the default card object 1910, as shown in FIG. 19(c). For example, the receipt object 1920 may correspond to a receipt with respect to an item paid immediately before output of the receipt. The mobile terminal may output the receipt object in a sliding manner from the top to the bottom.

As another example, the mobile terminal may sense an input signal 1922 applied to the default card object 1910, as shown in FIG. 19(b). Here, the input signal may correspond to the second touch described above with reference to FIGS. 10 and 11. In this case, the mobile terminal may output the receipt object 1920 with respect to previous payment using the default card object 1910, as shown in FIG. 19(c).

### Zoom-in of barcode included in coupon

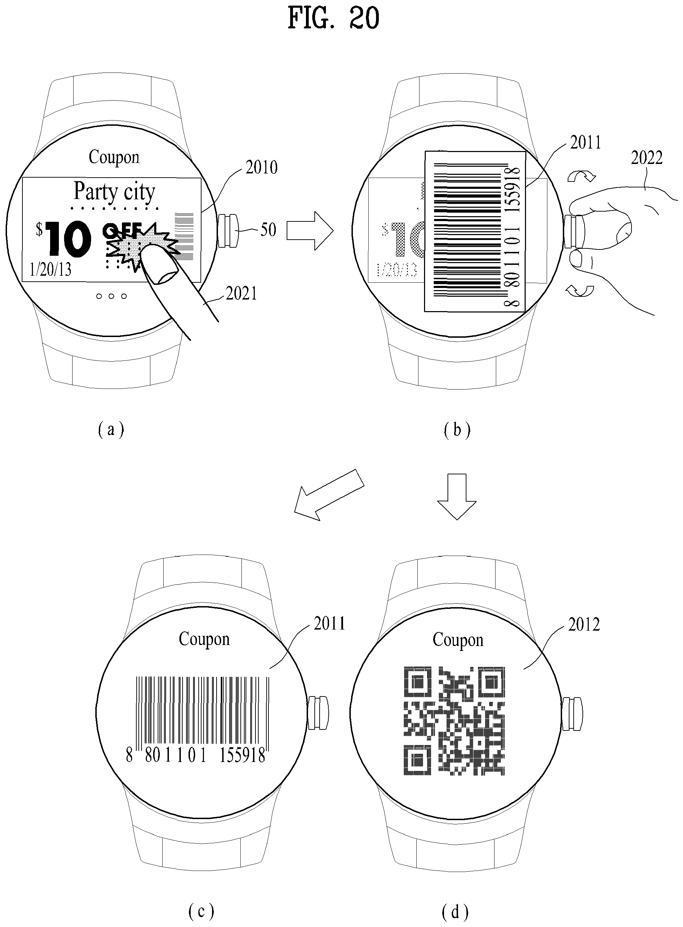

In general, a barcode occupies a small region in a coupon displayed on the watch-type mobile terminal, and thus it may be difficult for a barcode reader to directly recognize the barcode in the coupon. FIGS. 20 to 22 show methods of zooming in a barcode included in a coupon such that the barcode reader easily recognizes the barcode.

FIG. 20 shows an example of zooming in a barcode in the watch-type mobile terminal according to an embodiment of the present invention.

Referring to FIG. 20(a), the mobile terminal may output a registered coupon object 2010. Here, the registered coupon object may correspond to an electronic coupon registered when the mobile terminal approaches a POS terminal or is located in a coupon issuing store, as described above in the embodiment of FIG. 5. In addition, the mobile terminal may sense a first input signal 2021 applied to the coupon object 2010. Here, the first input signal 2021 may correspond to the second touch described above with reference to FIGS. 10 and 11. The first input signal is not limited thereto and may be replaced by a different type of input signal.

Subsequently, the mobile terminal may extract a barcode 2011 included in the coupon object 2010 according to the first input signal 2021. In addition, the mobile terminal may zoom in the barcode 2011 included in the coupon object 2010 and output the zoomed in barcode 2011, as shown in FIG. 20(b). Here, the barcode 2011 may be displayed in a small size or in the vertical direction on the display and thus the barcode reader may have difficulty recognizing the barcode 2011.

Accordingly, the mobile terminal may sense a second input signal 2022. For example, the second input signal 2022 may correspond to a signal of rotating the stem 50 in one direction. Further, the second input signal 2022 may correspond to pinch-in touch. The second input signal is not limited thereto and may be replaced by a different type of input signal. In this case, the mobile terminal may rotate the barcode 2011 displayed in the vertical direction and display the barcode 2011 in the horizontal direction, as shown in FIG. 20(c). Here, the mobile terminal may simultaneously rotate and zoom in the barcode 2011 and display the zoomed in barcode 2011 in the horizontal direction.

When the barcode 2011 is zoomed in, the entire barcode 2011 may not be displayed on the display. In this case, the mobile terminal may convert the barcode 2011 into a QR (Quick Response) code 2012 and output the QR code 2012 corresponding to the barcode 2011, as shown in FIG. 20(d), because the QR code 2012 can store a larger amount of data in a small space than the barcode.

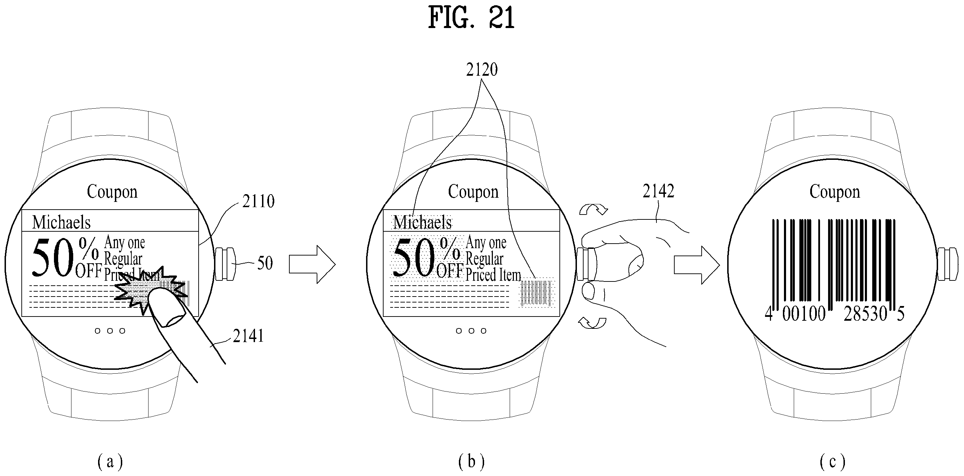

FIG. 21 shows an example of zooming in a barcode in the watch-type mobile terminal according to an embodiment of the present invention.

Referring to FIG. 21(a), the mobile terminal may output a registered coupon object 2110. Here, the registered coupon object may correspond to a paper coupon recognized through a camera and registered, as described above in the embodiment of FIG. 6. In addition, the mobile terminal may sense a first input signal 2141 applied to the coupon object 2110. Here, the first input signal 2141 may correspond to the second touch described above with reference to FIGS. 10 and 11. The first input signal is not limited thereto and may be replaced by a different type of input signal.

Subsequently, the mobile terminal may display an indicator 2120 on preset items included in the coupon object 2110 according to the first input signal 2141. Here, the preset items may correspond to main items set by the user or main items necessary to use the coupon. For example, the preset items may correspond to a coupon name, a coupon issuer, a coupon usage period, a barcode included in a coupon, etc.

The mobile terminal may sense a second input signal 2142. Here, the second input signal 2142 may correspond to an input of rotating the stem 50 in one direction. The second input signal is not limited thereto and may be replaced by a different type of input signal. In this case, the mobile terminal may zoom in a preset item included in the coupon object 2110 according to the second input signal 2142. For example, the mobile terminal may zoom in a barcode 2130 among preset items included in the coupon object 2110 and display the barcode according to the second input signal 2142, as shown in FIG. 21(c).

Although not shown in FIG. 21, when it is difficult to display the entire barcode on the display because the barcode is zoomed in, the mobile terminal may convert the barcode 2130 into a QR code and output the QR code.

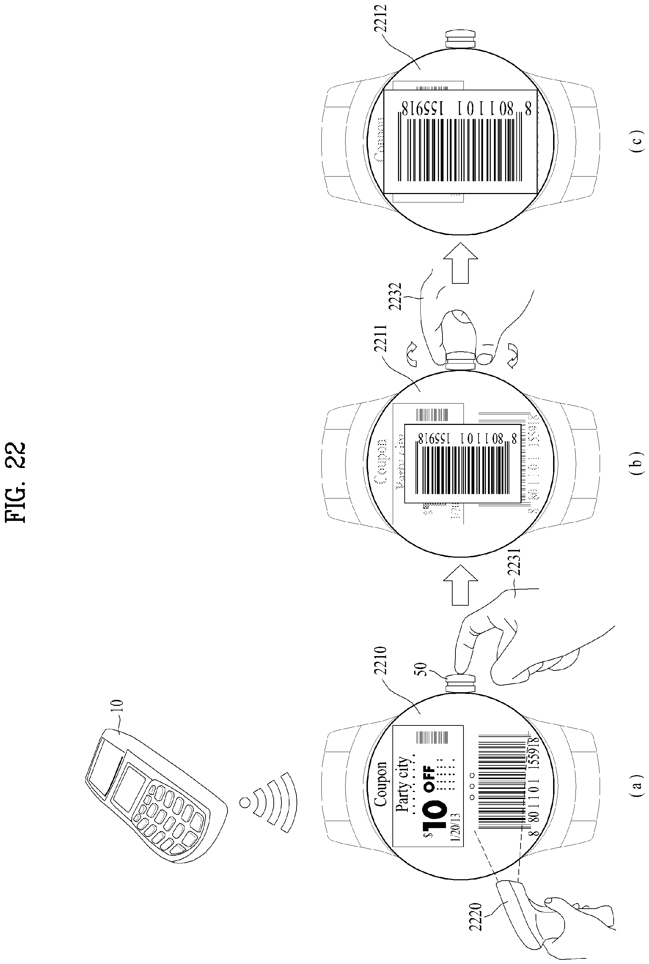

FIG. 22 shows an example of zooming in a barcode in the watch-type mobile terminal according to an embodiment of the present invention.

Referring to FIG. 22(a), the mobile terminal may output a coupon object 2210 which can be used when the mobile terminal approaches a POS terminal 10 or the payment application is executed. In addition, the mobile terminal may recognize the location thereof and output the coupon object 2210 which can be used in a store corresponding to the recognized location.

Here, the mobile terminal may simultaneously output the coupon object 2210 and a barcode 2211 included in the coupon object 2210, as shown in FIG. 22(a). For example, the mobile terminal may display the coupon object 2210 on the upper part of the display and display the barcode 2211 included in the coupon object on the lower part of the display. In this case, while a barcode reader 2220 may directly recognize the barcode 2211, the barcode reader 2220 may not directly recognize the barcode 2211 when the barcode 2211 is small.

In this case, the mobile terminal may sense a first input signal 2231. Here, the first input signal 2231 may correspond to a signal of pushing the stem 50. Then, the mobile terminal may extract the barcode 2211 from the coupon object 2210 and display the barcode 2211 according to the first input signal 2231. The extracted and displayed barcode 2211 may not have a size suitable to be recognized by the barcode reader 2220.

Then, the mobile terminal may sense a second input signal 2232. The second input signal may correspond to an input of rotating the stem 50 in one direction. For example, when the second input signal 2232 is an input of rotating the stem 50 clockwise, as shown in FIG. 21(c), the mobile terminal may zoom in the barcode 2211 and display the zoomed in barcode 2212. As another example, when the second input signal 2232 is an input of rotating the stem 50 counterclockwise, the mobile terminal may zoom out the barcode 2211 and display the zoomed-out barcode. The second input signal is not limited thereto and may be replaced by a different type of input signal.

### Automatic coupon output during payment

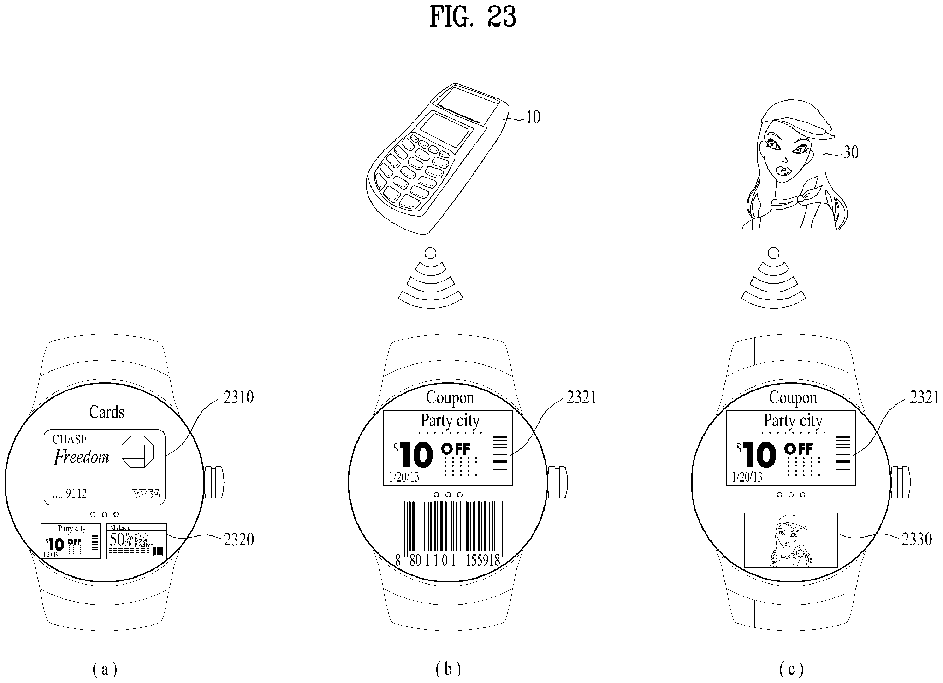

When the user intends to use a coupon during payment while wearing the mobile terminal, it may be difficult for the user to search for registered coupons every time. FIG. 23 shows an example of automatically outputting a coupon during payment in the watch-type mobile terminal according to an embodiment of the present invention.

Referring to FIG. 23(a), the mobile terminal may execute the payment application. For example, when the payment application is executed, the user may search for a credit card object 2310 for payment and a plurality of coupon objects 2320 registered with the mobile terminal by means of the mobile terminal. In the present embodiment, a method of automatically outputting available coupon objects when a plurality of coupon objects 2320 has been registered will be described.

Referring to FIG. 23(b), the mobile terminal may recognize the POS terminal 10 located in proximity thereto. Here, it is assumed that information about a store or a restaurant in which the mobile terminal is located has been registered with the POS terminal 10. In this case, the mobile terminal may automatically output coupon objects 2321 which can be used in the store or restaurant equipped with the POS terminal 10 upon recognition of the POS terminal 10 located in proximity thereto. Accordingly, the user can easily use coupons which can be used in the store or restaurant without additional time or efforts.

Alternatively, the mobile terminal may recognize another user 30 located in proximity thereto, as shown in FIG. 23(c). This case may correspond to a state in which a coupon which can be used in the store or restaurant in which the mobile terminal is located is not registered with the mobile terminal. More specifically, the mobile terminal may recognize a device of another user located in proximity thereto. In this case, the mobile terminal may transmit a message to the device of another user to request transmission of a coupon that the user wants to use. In addition, the mobile terminal may request transmission or sharing of the coupon that the user wants to use by performing short-range communication with the device of another user.

### Combination and use of barcodes or QR codes included in coupons

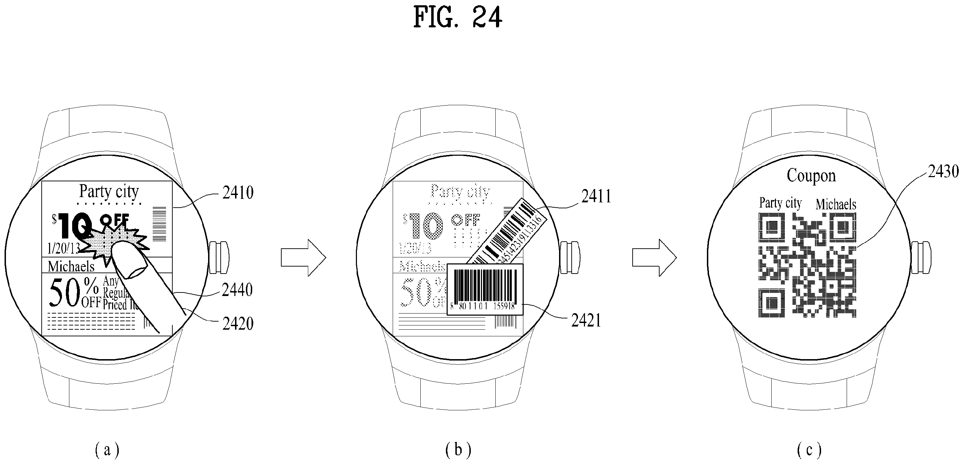

When the user uses a plurality of coupons during payment, it may be inconvenient for the user to search for the plurality of coupons to use the same every time. Methods of combining barcodes or QR codes included in a plurality of coupons and using combined barcodes or QR codes will be described with reference to FIGS. 24 to 35.

FIG. 24 shows an example of combining barcodes included in coupons in the watch-type mobile terminal according to an embodiment of the present invention.

First, the mobile terminal may output a plurality of coupon objects registered therewith. For example, the registered coupon objects may include a first coupon object 2410 and a second coupon object 2420, as shown in FIG. 24(a). Here, the mobile terminal may sense an input signal 2420. For example, the input signal 2420 is touch input applied to the display and may correspond to the second touch described above with reference to FIGS. 10 and 11. The input signal is not limited thereto and may be replaced by a different type of input signal.

Subsequently, the mobile terminal may extract barcodes 2411 and 2421 included in the coupon objects according to the input signal 2420. In addition, the mobile terminal may combine the extracted barcodes 2411 and 2421, as shown in FIG. 24(b). Here, the mobile terminal may output the combined barcodes (not shown). Alternatively, the mobile terminal may convert the combined barcodes into a QR code 2430 and display the QR code 2430. Here, the names of the coupons including the combined barcodes may be indicated in the upper part of the QR code 2430.

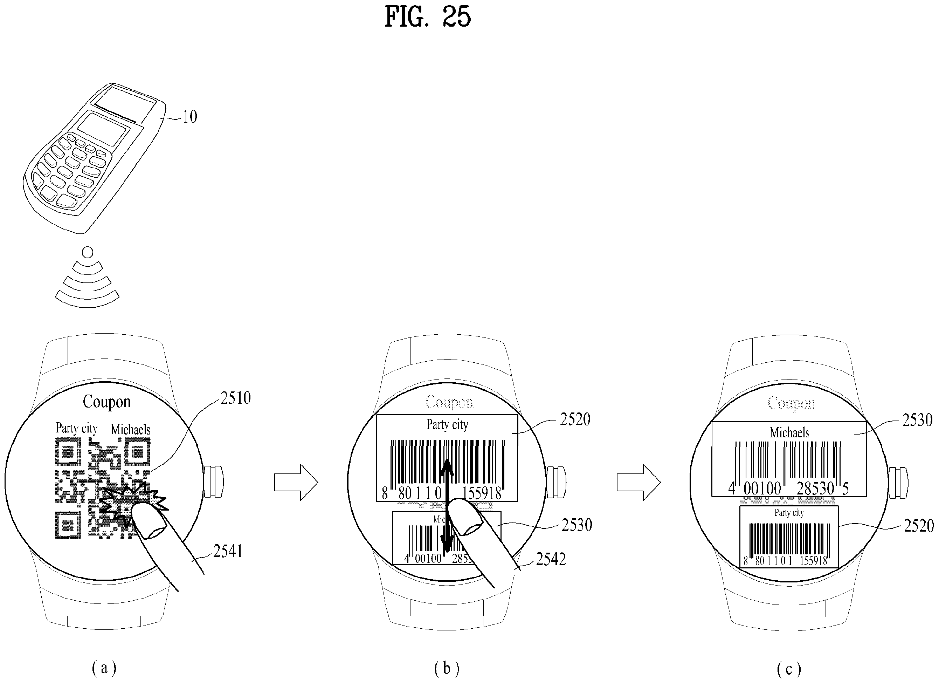

FIG. 25 shows an example of using the barcodes combined in the embodiment of FIG. 24.

First, the mobile terminal may recognize the POS terminal 10 located in proximity thereto. Referring to FIG. 25(a), the mobile terminal may output coupon objects which can be used in the shop or restaurant equipped with the POS terminal 10. Here, the mobile terminal may display the coupon objects in the form of a QR code 2510. For example, the QR code 2510 may correspond to a state in which the aforementioned two barcodes are combined.

Then, the mobile terminal may sense a first input signal 2541. The first input signal 2541 is touch input applied to the display and may correspond to the second touch described above with reference to FIGS. 10 and 11. The first input signal is not limited thereto and may be replaced by a different type of input signal. In this case, the mobile terminal may separate the barcodes included in the QR code 2510 and display the separated barcodes, as shown in FIG. 25(b). That is, the mobile terminal can separate the first barcode 2520 and the second barcode 2530 from the QR code and display the first barcode 2520 and the second barcode 2530. Accordingly, the barcode reader can recognize the barcodes displayed on the mobile terminal.

The user may want to use only the second barcode 2530 for payment. In this case, the second barcode 2530 may be too small to be recognized by the barcode reader. Here, the mobile terminal may sense a second input signal 2542. The second input signal 2542 may correspond to upward or downward drag (flicking) touch.

Referring to FIG. 25(c), the mobile terminal may change the positions of the first barcode 2520 and the second barcode 2530 according to the second input signal 2542. In this case, the second barcode 2530 is zoomed in and thus the barcode reader can easily recognize the second barcode 2530.

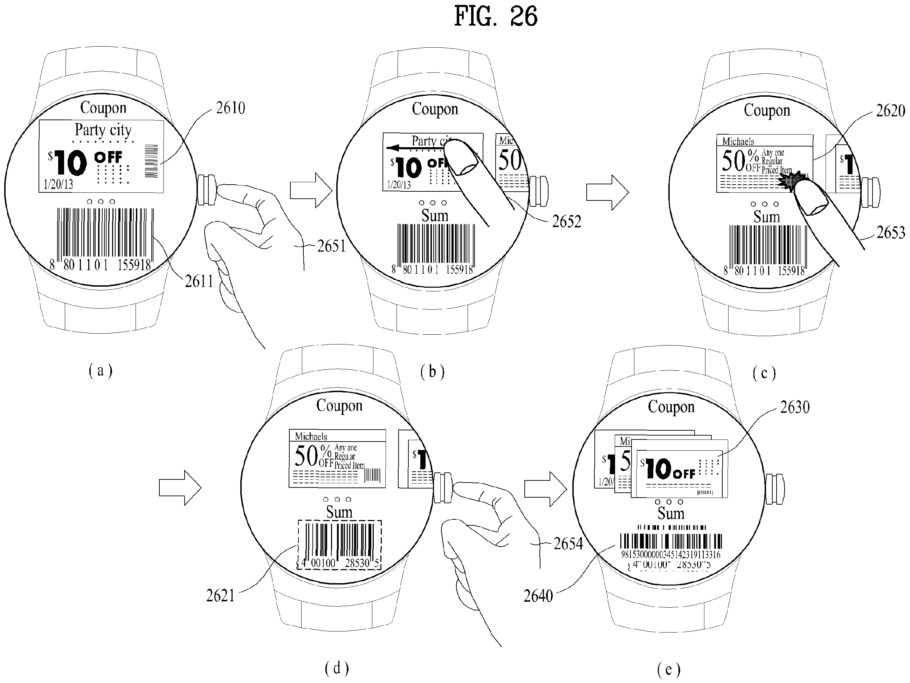

FIG. 26 shows an example of combining barcodes included in coupons in the watch-type mobile terminal according to an embodiment of the present invention.

Referring to FIG. 26(a), the mobile terminal may output a first coupon object 2610 on the display in a state in which the payment application is executed. Here, the mobile terminal may simultaneously output a first barcode 2611 included in the first coupon object 2610 to the lower part of the display.

Then, the mobile terminal may sense a first input signal 2651. The input signal 2420 may be an input of pushing the stem 50. The first input signal is not limited thereto and may be replaced by a different type of input signal. In this case, the mobile terminal may determine the first barcode 2611 included in the first coupon object 2610 as a barcode for combination.

Referring to FIG. 26(b), the mobile terminal may sense a second input signal 2652. The second input signal 2652 may correspond to touch input applied to the display in the left or right direction. The second input signal 2652 may correspond to an input having the same strength as the first touch described above with reference to FIGS. 10 and 11. The second input signal is not limited thereto and may be replaced by a different type of input signal. In this case, the mobile terminal may remove the first coupon object 2610 displayed in the upper part of the display and display a second coupon object 2620, as shown in FIG. 26(C). Here, the mobile terminal may continuously display the first barcode 2611 determined as a barcode for combination in the lower part of the display.

Subsequently, the mobile terminal may sense a third input signal 2653 applied to the second coupon object 2620. Here, the third input signal 2653 may correspond to the first touch or the second touch described above with reference to FIGS. 10 and 11. In this case, the mobile terminal may display a second barcode 2621 included in the second coupon object 2620 in the lower part of the display, as shown in FIG. 26(d).

In addition, the mobile terminal may sense a fourth input signal 2654 while the second barcode 2621 is displayed. The fourth input signal 2654 may be the same signal as the first input signal 2651. In this case, the mobile terminal may determine the second barcode 2621 included in the second coupon object 2620 as a barcode for combination and combine the second barcode 2621 with the first barcode 2611.

The mobile terminal may combine a plurality of barcodes included in a plurality of coupon objects by repeatedly executing the above-described steps. Referring to FIG. 26(e), upon completion of combination of barcodes, the mobile terminal may display the combined coupon objects 2630 in an overlay manner in the upper part of the display and display the combined barcodes 2640 in an overlay manner in the lower part of the display.

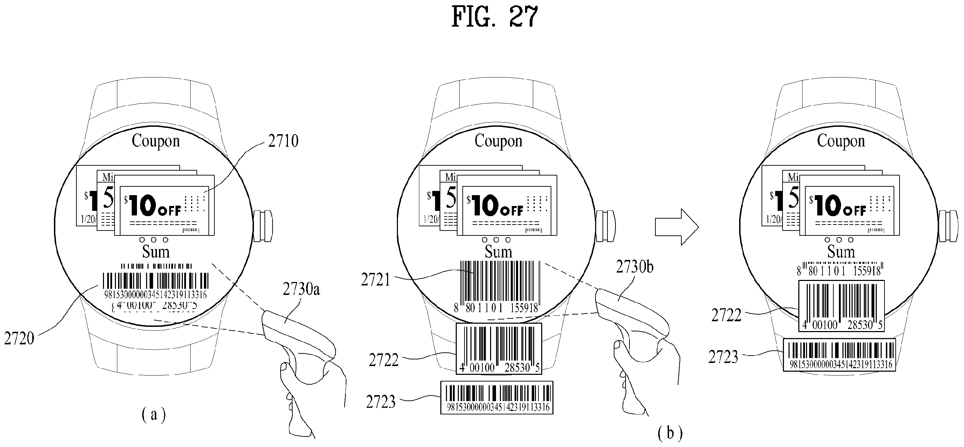

FIG. 27 shows an example of using the barcodes combined in the embodiment of FIG. 26.

For example, the mobile terminal may simultaneously use combined barcodes 2720 as a single barcode. In this regard, the mobile terminal may simultaneously display combined coupon objects 2710 and the combined barcodes 2720 on the display, as shown in FIG. 27(a). When a barcode reader 2730a is located in proximity to the combined barcodes 2720, the barcode reader 2730a can simultaneously recognize the combined barcodes 2720. In this case, the mobile terminal can simultaneously use the plurality of coupon objects corresponding to the combined barcodes 2720 during payment.

As another example, the mobile terminal may sequentially use a plurality of barcodes included in combined barcodes. In this regard, the mobile terminal may sequentially output the barcodes included in the combined barcodes during payment, as shown in FIG. 27(b). For example, it is assumed that the combined barcodes include three barcodes 2721, 2722 and 2723. The left figure of FIG. 27(b) shows a state in which only the first barcode 2721 is displayed in the lower part of the display.

Here, when a barcode reader 2730b recognizes the first barcode 2721, the mobile terminal may display the second barcode 2722 at the lower end of the display. In addition, when the barcode reader 2730b recognizes the second barcode 2722, the mobile terminal may display the third barcode 2723 at the lower end of the display.

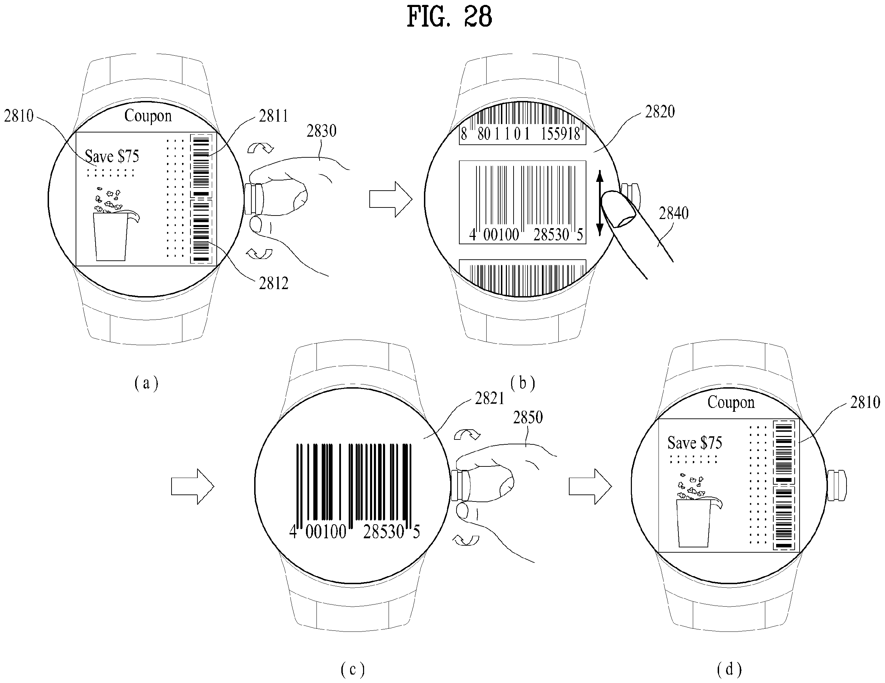

FIG. 28 shows an example of zooming in a plurality of barcodes in the watch-type mobile terminal according to an embodiment of the present invention.

Referring to FIG. 28(a), the mobile terminal may display one coupon object 2810 including a plurality of barcodes 2811 and 2812 when the payment application is executed. Here, the mobile terminal may sense a first input signal 2830. The first input signal 2830 may correspond to an input of rotating the stem 50 clockwise. The first input signal is not limited thereto and may be replaced by a different type of input signal.

Referring to FIG. 28(b), the mobile terminal may display the barcodes 2811 and 2812 included in the coupon object 2810 according to the first input signal 2830. That is, this operation may correspond to barcode zoom-in. Here, the mobile terminal may sense a second input signal 2840. The second input signal 2840 may have strength corresponding to the first touch or the second touch described above with reference to FIGS. 10 and 11. In this case, the mobile terminal may scroll the displayed barcodes, as shown in FIG. 28(c).

Referring to FIG. 28(c), the mobile terminal may sense a third input signal 2850. Here, the third input signal 2850 is a signal in a direction opposite the first input signal 2830 and may correspond to an input of rotating the stem 50 counterclockwise. In this case, the mobile terminal may cancel barcode zoom-in and display the coupon object 2810, as shown in FIG. 28(d).

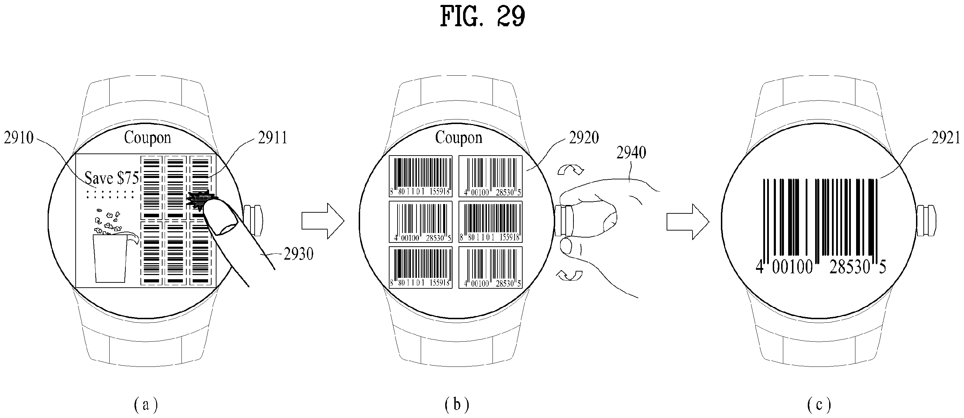

FIG. 29 shows an example of zooming in a plurality of barcodes in the watch-type mobile terminal according to an embodiment of the present invention.

Referring to FIG. 29(a), the mobile terminal may display one coupon object 2910 including a plurality of barcodes 2911 when the payment application is executed. In the embodiment of FIG. 29, it is assumed that the coupon object 2910 includes six barcodes. Here, the mobile terminal may sense a first input signal 2930 applied to the plurality of barcodes 2911. The first input signal 2930 may correspond to long touch input.

Referring to FIG. 29(b), the mobile terminal may simultaneously display the plurality of barcodes 2911 included in the coupon object 2910 according to the first input signal 2930. More specifically, the mobile terminal may zoom out the six barcodes 2911 and simultaneously display the same as thumbnails.

Here, the mobile terminal may sense a second input signal 2940. The second input signal 2940 may correspond to an input of rotating the stem 50 in one direction. In this case, the mobile terminal may zoom in the six barcodes 2921, as shown in FIG. 29(c). Accordingly, the mobile terminal can output the six barcodes one by one using the stem or touch scroll to use the same for payment.

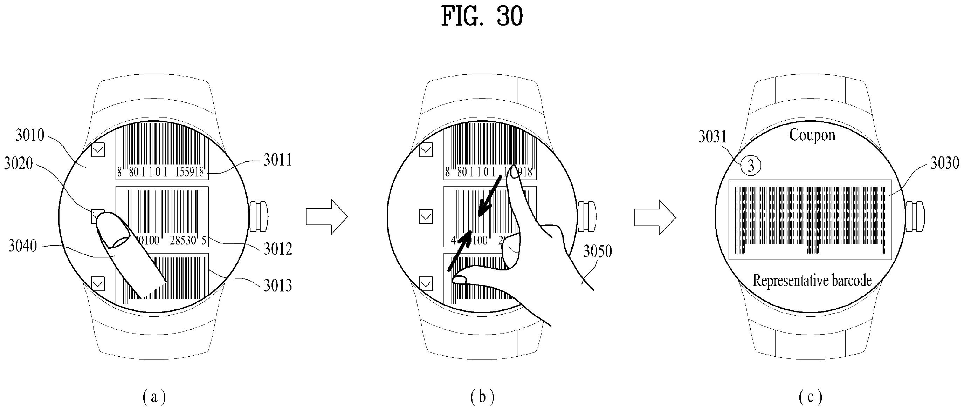

FIG. 30 shows an example of combining a plurality of barcodes in the watch-type mobile terminal according to an embodiment of the present invention.

Referring to FIG. 30(a), the mobile terminal may display a plurality of barcodes on the display. Here, the mobile terminal may simultaneously display a menu option for setting combination of barcodes along with the barcodes.

Here, the user may apply an input signal to a check box in order to combine first, second and third barcodes 3011, 3012 and 3013. That is, the mobile terminal may sense a first input signal 3040 applied to the first, second and third barcodes 3011, 3012 and 3013. The first input signal 3040 may correspond to short touch applied to a menu option 3020 of the first, second and third barcodes 3011, 3012 and 3013.

Referring to FIG. 30(b), the mobile terminal may sense a second input signal 3050. The second input signal 3050 may correspond to pinch-out touch. In this case, the mobile terminal may output a combined barcode 3030 obtained by combining the first, second and third barcodes 3011, 3012 and 3013 into one barcode, as shown in FIG. 30(c). For example, the combined barcode 3030 may correspond to a barcode obtained by combining the plurality of barcodes in an overlay manner in the same area.

As an example, the mobile terminal may display the individual barcodes in the combined barcode in colors in order to indicate that the combined barcode is obtained by combining the barcodes. In the embodiment of FIG. 30(c), the mobile terminal may display the combined barcode in three colors since the three barcodes have been combined. As another embodiment, the mobile terminal may display an indicator 3031 indicating the number of combined barcodes in proximity to the combined barcode 3030 in order to indicate that the combined barcode is obtained by combining the barcodes, as shown in FIG. 30(c).

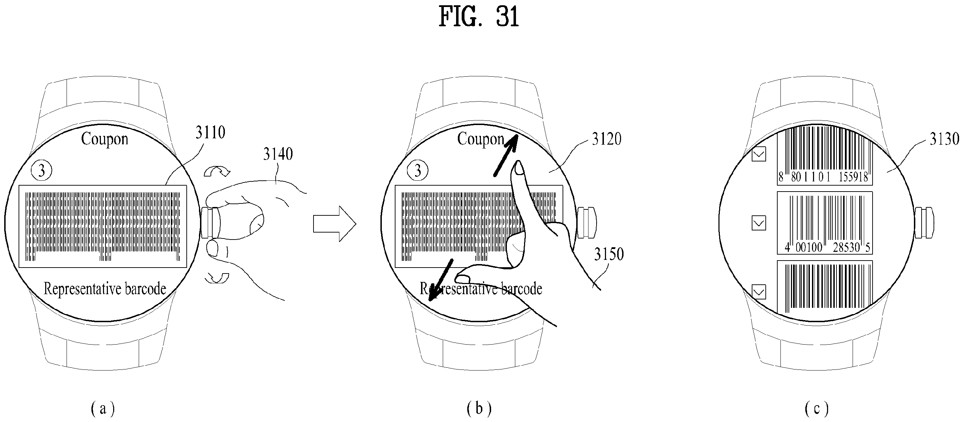

FIG. 31 shows an example of separating the barcodes combined in the embodiment of FIG. 30.

Referring to FIG. 31(a), the mobile terminal may display a combined barcode 3110 on the display. Here, the combined barcode 3110 may correspond to the combination of the three barcodes in FIG. 30. Here, the mobile terminal may sense a first input signal 3140. The first input signal 3140 may correspond to an input of rotating the stem 50 in one direction.

Referring to FIG. 31(b), the mobile terminal may display one 3120 of the plurality of barcodes included in the combined barcode 3110 according to the first input signal 3140. For example, the displayed barcode 3120 may correspond to a barcode included in a coupon having a shortest expiration date among a plurality of coupon objects. Alternatively, the displayed barcode 3120 may correspond to a barcode included in a coupon having a highest discount rate. The displayed barcode 3120 may be determined according to a criterion set by the user.

Although not shown in FIG. 31(b), the mobile terminal may display the remaining barcodes other than the barcode 3120 on the display upon sensing an input signal of rotating the stem. Here, the mobile terminal may blur the barcode 3120.

The mobile terminal may sense a second input signal 3150 applied to the display. The second input signal 3150 may correspond to pinch-in touch. In this case, the mobile terminal may separate the combined barcode 3110 and display the separated barcodes according to the second input signal 3150.

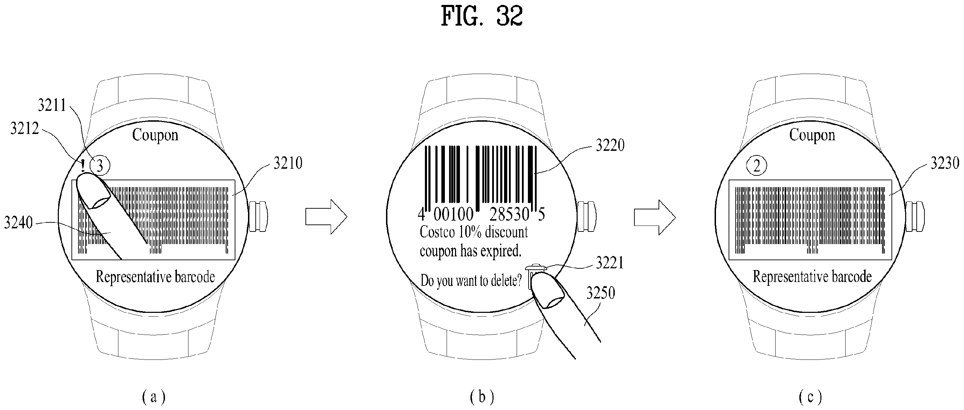

FIG. 32 shows an example of deleting some barcodes included in a combined barcode in the watch-type mobile terminal according to an embodiment of the present invention.

Referring to FIG. 32(a), the mobile terminal may display a combined barcode 3210 on the display. Here, the mobile terminal may display a first indicator 3211 indicating the number of barcodes included in the combined barcode 3210 in proximity to the combined barcode 3210. In addition, the mobile terminal may display a second indicator 3212 in proximity to the combined barcode 3210. The second indicator 3212 may indicate that at least some of the barcodes included in the combined barcode 3210 have expired.

The mobile terminal may sense a first input signal 3240 applied to the second indicator 3212. The first input signal 3240 may correspond to the first touch or the second touch described above with reference to FIGS. 10 and 11. Referring to FIG. 32(b), the mobile terminal may display a barcode 3220 of a coupon which has expired among the plurality of barcodes included in the combined barcode 3210 according to the first input signal 3240. In addition, the mobile terminal may simultaneously display information about the barcode 3220 along with the barcode 3220. Although not shown in FIG. 32, the mobile terminal may display a barcode which has been used among the plurality of barcodes included in the combined barcode 3210 on the display according to the first input signal 3240.

As shown in FIG. 32(b), the mobile terminal may display a menu option 3221 for selecting whether to delete the barcode 3220 of the coupon which has expired on the display. The mobile terminal may sense a second input signal 3250. The second input signal 3250 may correspond to the first touch or the second touch described above with reference to FIGS. 10 and 11.

Referring to FIG. 32(c), the mobile terminal may delete the barcode 3220 of the coupon which has expired and display a barcode 3230 corresponding to a combination of the remaining barcodes. Here, the mobile terminal may display the first indicator 3211 indicating the number of remaining barcodes.

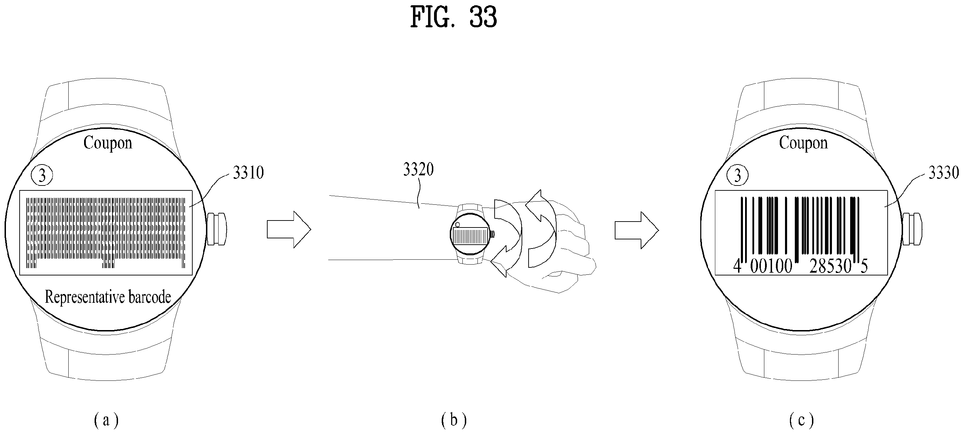

FIG. 33 shows an example of selecting a barcode according to an input signal in the watch-type mobile terminal according to an embodiment of the present invention.

Referring to FIG. 33(a), the mobile terminal may display a combined barcode 3310 on the display. For example, the combined barcode 3310 may correspond to a combination of three simultaneously-output barcodes. Referring to FIG. 33(b), the mobile terminal may sense an input signal 3320. The input signal 3320 may correspond to a signal of rotating the mobile terminal to the left and right. That is, the input signal 3320 may correspond to a signal sensed when the user shakes a wrist wearing the mobile terminal to the left and right. For example, the input signal 3320 may correspond to an input of shaking the mobile terminal three times or more to the left and right. The input signal is not limited thereto and may be replaced by different types of input signals.

In this case, as shown in FIG. 33(c), the mobile terminal may display a preset barcode 3330 among the plurality of barcodes included in the combined barcode 3320 according to the input signal 3320. As an example, the preset barcode 3330 may correspond to a barcode of a coupon having a highest discount rate or savings rate. As another example, the preset barcode 3330 may correspond to a barcode of a coupon having a shortest expiration date. As another example, the present barcode 3330 may correspond to a barcode predetermined by the user.

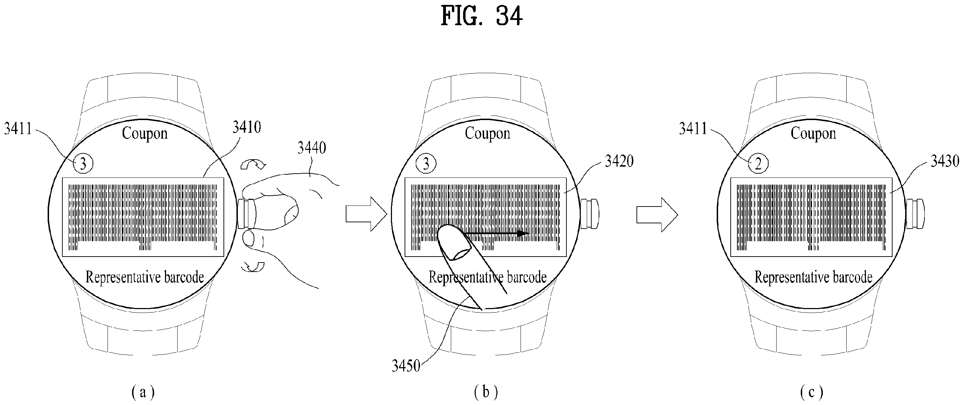

FIG. 34 shows an example of deleting some of a plurality of barcodes included in a combined barcode in the watch-type mobile terminal according to an embodiment of the present invention.

Referring to FIG. 34(a), the mobile terminal may display a combined barcode 3410 on the display. For example, the combined barcode 3410 may correspond to a combination of three simultaneously-output barcodes. The mobile terminal may display an indicator 3411 indicating the number of barcodes in proximity to the combined barcode 3410.

Subsequently, the mobile terminal may sense a first input signal 3440. The first input signal 3440 may correspond to an input of rotating the stem in one direction. The first input signal is not limited thereto and may be replaced by different types of input signals.

In this case, the mobile terminal may display a preset barcode 3420 among the plurality of barcodes included in the combined barcode 3410 according to the first input signal 3440, as shown in IFG. 34(b). Here, the preset barcode 3420 may correspond to a barcode that the user does not want to use for payment. For example, the preset barcode 3420 may correspond to a barcode of a coupon having a lowest discount rate. Further, the preset barcode 3420 may correspond to a barcode of a coupon having a longest expiration date.

The mobile terminal may sense a second input signal 3450 applied to the preset barcode 3420. Here, the second input signal 3450 may correspond to drag (flicking) touch in the left or right direction. Further, the second input signal 3450 may have strength corresponding to the first touch or second touch described above with reference to FIGS. 10 and 11.

In this case, the mobile terminal may delete the preset barcode 3420 from the combined barcode 3410. As shown in FIG. 34(c), the mobile terminal may display a barcode 3230 corresponding to a combination of the remaining barcodes. Here, the indicator 3411 can indicate the number of barcodes remaining after the preset barcode 3420 has been deleted.

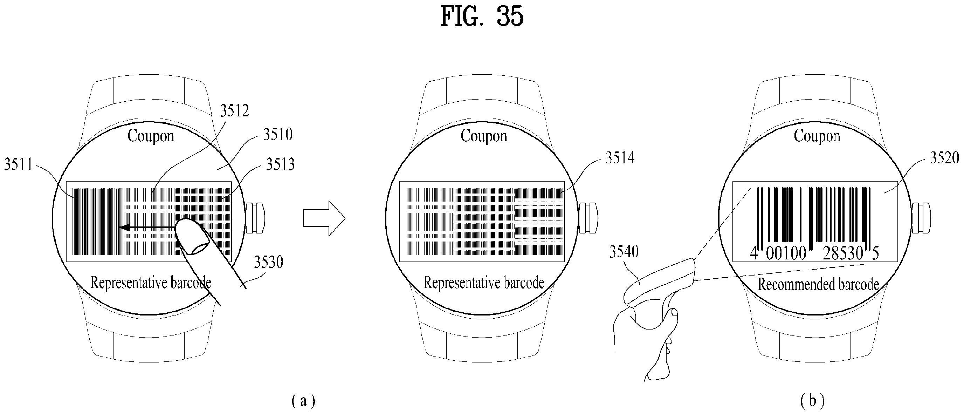

FIG. 35 shows an example of combining a plurality of barcodes in the watch-type mobile terminal according to an embodiment of the present invention.

Referring to FIG. 35(a), the mobile terminal may display a combined barcode 3510 on the display. The combined barcode 3510 may correspond to a plurality of barcodes combined in a row without overlapping, differently from the combined barcodes described above with reference to FIGS. 30 to 34. For example, the combined barcode 3510 shown in FIG. 356(a) may correspond to first, second, third and fourth barcodes 3511, 3512, 3513 and 3514 combined in a row. In this case, the length of the combined barcode 3510 exceeds the horizontal length of the display and thus the entire barcode 3510 may not be displayed on the display.

Here, the mobile terminal may sense an input signal 3530 applied to the combined barcode 3510. The input signal 3530 may correspond to a drag (flicking) touch input in the left direction. Further, the input signal 3530 may have strength corresponding to the first touch or the second touch described above with reference to FIGS. 10 and 11. In this case, the mobile terminal may display the fourth barcode 3514 which has not been displayed according to the input signal 3530. Accordingly, the user can confirm all of the plurality of barcodes included in the combined barcode 3510.

The mobile terminal may recognize a barcode reader 3540 located in proximity thereto while the combined barcode 3510 is displayed on the display. For example, the mobile terminal may recognize the barcode reader 3540 through short-range communication such as NFC. In this case, the mobile terminal may display a preset barcode 3520 among the plurality of barcodes included in the combined barcode 3510, as shown in FIG. 35(c). For example, the preset barcode 3520 may correspond to a barcode of a coupon having the nearest expiration date. Alternatively, the preset barcode 3520 may correspond to a barcode of a coupon having a highest discount rate.

### Error in recognition of credit card and coupon during payment

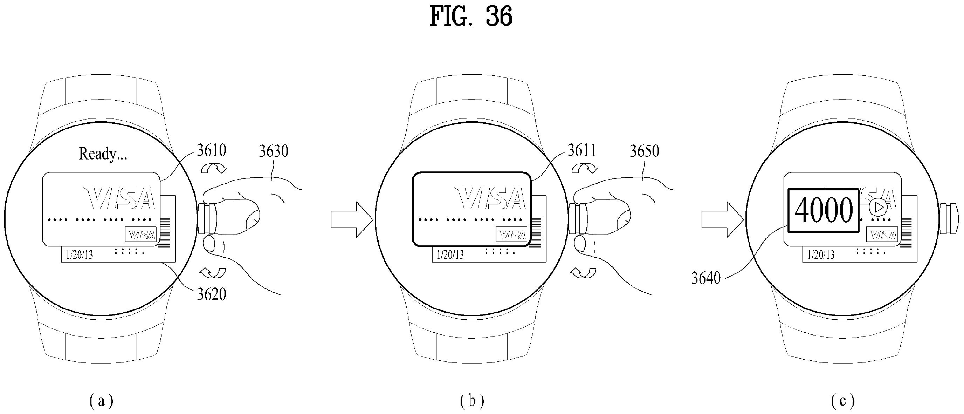

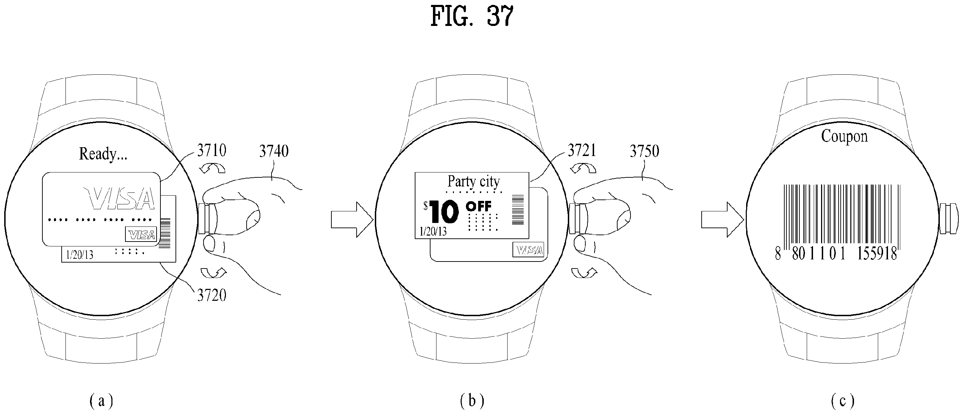

When the payment application is executed, payment cards and available coupons can be simultaneously displayed on the display. In this case, which payment card and coupon will be used first may need to be selected. Further, a payment error may be generated when a payment card and a coupon are used. FIGS. 36 and 37 show methods of selecting one of a payment card and a coupon which will be used first and using the selected one for payment.

FIG. 36 shows an example of zooming in card numbers during payment in the watch-type mobile terminal according to an embodiment of the present invention.

Referring to FIG. 36(a), the mobile terminal may display a payment card object 3610 and a coupon object 3620 which can be used for payment on the display when the payment application is executed. Here, the payment card object 3610 is a default card and may correspond to a card previously designated by the user as a card used for payment. In addition, the coupon object 3620 which can be used for payment may correspond to a coupon automatically provided when the mobile terminal recognizes a POS terminal (not shown) or a place in which payment is performed. Although not shown in FIG. 36, the payment card and the coupon may be changed by an input signal of the user. Furthermore, although the payment card object 3610 is displayed overlying the coupon object 3620 in FIG. 36(a), the payment card object 3610 and the coupon object 3620 may be displayed in parallel.

The mobile terminal may sense a first input signal 3630. The first input signal 3630 may correspond to an input of rotating the stem clockwise. Although not shown in FIG. 36(a), the first input signal 3630 may correspond to upward drag (flicking) touch input. The first input signal is not limited thereto and may be replaced by a different type of input signal.

In this case, the mobile terminal may select the payment card object 3610 according to the first input signal 3630, as shown in FIG. 36(b). In addition, the mobile terminal may display an indicator 3611 indicating selection of the payment card 3610.

Accordingly, the user can use the payment card object 3610 first for payment and then use the coupon object 3620. When the payment card object 3610 is used for payment using short-range wireless communication such as NFC, however, an error may be generated in POS (not shown) or NFC communication. In this case, card numbers of the payment card object 3610 need to be additionally input.

In this case, the mobile terminal may sense a second input signal 3650. The second input signal 3650 may correspond to an input of rotating the stem in one direction. As shown in FIG. 36(c), the mobile terminal may zoom in the card numbers included in the payment card object 3610 and display the card numbers on the display according to the second input signal 3650. For example, in the case of 16-digit card numbers, the mobile terminal can display the card numbers by 4 digits on the display. Accordingly, when an input signal is sensed after 4-digit numbers are displayed, the mobile terminal may display the following 4-digit numbers. Accordingly, payment can be easily performed even when a credit card cannot be used for payment through signal transmission and reception.

FIG. 37 shows an example of zooming in a coupon object during payment in the watch-type mobile terminal according to an embodiment of the present invention. Description of redundant parts in the embodiments of FIGS. 36 and 37 is omitted.

Referring to FIG. 37(a), the mobile terminal may display a payment card object 3710 and a coupon object 3720 which can be used for payment on the display when the payment application is executed. The mobile terminal may sense a first input signal 3740. The first input signal 3740 may correspond to an input of rotating the stem counterclockwise. The first input signal 3740 in FIG. 37 may correspond to input in a direction opposite the first input signal in FIG. 36. Although not shown in FIG. 37(a), the first input signal 3740 may correspond to downward drag (flicking) touch input. The first input signal of FIG. 36 and the first input signal of FIG. 37 correspond to signals in opposite directions and are not limited to the above-described embodiments.

In this case, the mobile terminal may select the coupon object 3720 according to the first input signal 3740, as shown in FIG. 37(b). In addition, the mobile terminal may display an indicator 3721 indicating selection of the coupon object 3720. Accordingly, the user can present the coupon object 3720 first for payment and then use the credit card object 3710. When the coupon object 3720 is used, a barcode included in the coupon object 3720 needs to be recognized, and when the barcode has an error, serial numbers of the barcode need to be input, and thus the coupon object 3720 needs to be zoomed in.

In this case, the mobile terminal may sense a second input signal 3750. The second input signal 3750 may correspond to an input of rotating the stem in one direction. As shown in FIG. 36(c), the mobile terminal may zoom in the barcode 3730 included in the coupon object 3720 and display the barcode according to the second input signal 3750. Accordingly, a barcode reader (not shown) can easily recognize the coupon object 3720. When the barcode 3730 is not recognized through the barcode reader (not shown), the serial numbers included in the barcode or serial numbers given to the coupon object 3720 may be additionally input for payment.

### Cancellation and selection of coupon to be used for payment

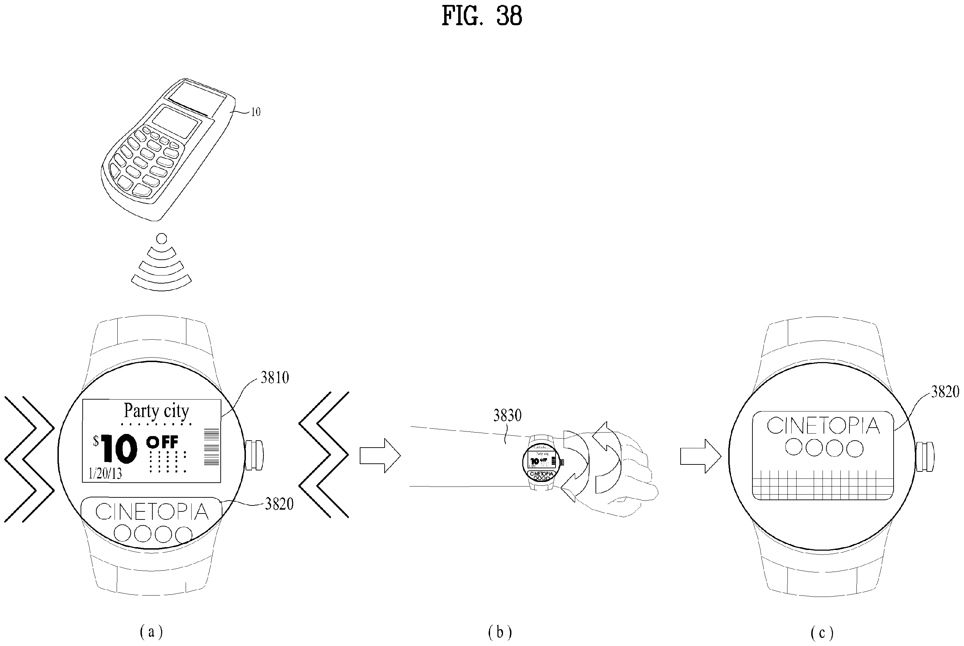

FIG. 38 shows an example of cancelling a coupon which can be used for payment in the watch-type mobile terminal according to an embodiment of the present invention.

Referring to 38(a), the mobile terminal may display a coupon object 3810 which can be used for payment and a membership card object 3820 on the display when the payment application is executed. For example, the payment application may be executed by an input signal of the user. Alternatively, the payment application may be automatically executed when the POS terminal 10 is located in proximity to the mobile terminal. Here, the mobile terminal may provide a vibration notification while displaying the coupon object 3810 which can be used for payment and the membership card object 3820 to notify the user that there is a coupon object or a membership card which can be used in the shop or restaurant where the user is currently located.

Here, the user may want to use only the membership card 3820 for payment. Referring to FIG. 38(b), the mobile terminal may sense an input signal 3830. The input signal 3830 may be a signal of shaking the mobile terminal to the left and right and may correspond to an action of the user shaking a wrist wearing the mobile terminal. The input signal is not limited thereto and may be replaced by a different type of input signal.

In this case, the mobile terminal may remove the displayed coupon object 3810 and display only the membership card 3820 on the display according to the input signal 3830, as shown in FIG. 38(c). Although not shown in FIG. 38, the mobile terminal may remove the membership card and display only the coupon object according to setting.

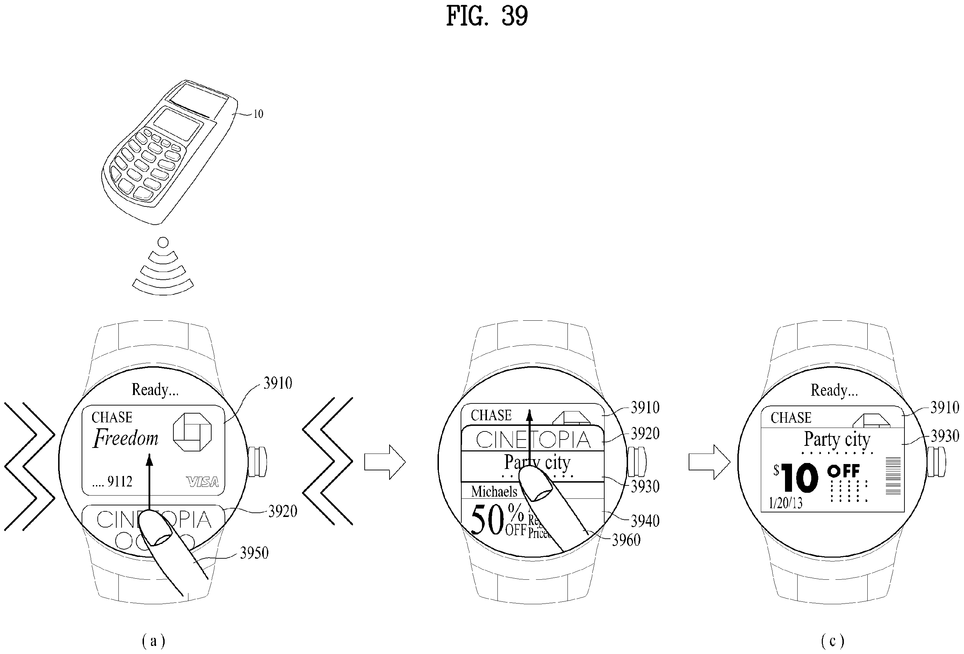

FIG. 39 shows an example of selecting a coupon to be used for payment in the watch-type mobile terminal according to an embodiment of the present invention.

Referring to 39(a), the mobile terminal may display a payment card object 3910, a membership card object 3920 and a coupon object 3810 which can be used for payment when the payment application is executed. Here, the coupon object may not be displayed due to space restriction of the display. For example, the payment application may be automatically executed when the POS terminal 10 is located in proximity to the mobile terminal.

Here, the mobile terminal may provide a vibration notification while displaying the payment card object 3910 and the membership card object 3920. For example, the number of times of generation of the vibration notification may be determined by the number of coupon objects which can be used for payment. In the embodiment of FIG. 39, the number of coupons which can be used for payment is 2 and thus the vibration notification can be generated twice. Accordingly, the user can recognize how many coupons are present through vibration but visually cannot check the coupons.

Here, the user may want to check coupons which can be used for payment and use the coupons for payment. Referring to FIG. 39(a), the mobile terminal may sense a first input signal 3950. The first input signal 3950 may correspond to an upward drag (flicking) touch input. In this case, the mobile terminal may output a first coupon object 3930 and a second coupon object 3940 according to the first input signal 3950, as shown in FIG. 39(b). Here, the mobile terminal may display a credit card object 3910, a membership card object 3920, the first coupon object 3930 and the second coupon object 3940 in an overlay manner.

The user may want to use only the first coupon object 3930 between the first and second coupon objects 3930 and 3940. Referring to FIG. 39(b), the mobile terminal may sense a second input signal 3960. The second input signal 3960 may correspond to drag-and-drop touch which starts from the position at which the first coupon object 3930 is displayed and ends at the position at which the payment card object 3910 is displayed.

In this case, the mobile terminal may display the credit card object 3910 and the first coupon object 3930 on the display according to the second object 3960, as shown in FIG. 39(c). Accordingly, the user can freely select a desired coupon and use the coupon for payment.

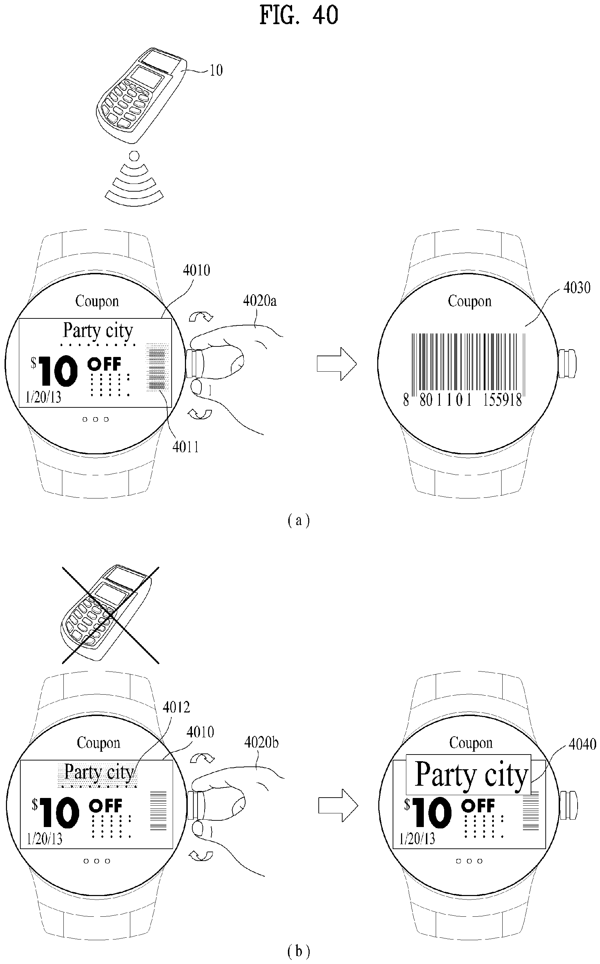

FIG. 40 shows an example of using a coupon according to whether POS is closely located in the watch-type mobile terminal according to an embodiment of the present invention.

More specifically, FIG. 40(a) shows an embodiment in which the POS terminal 10 is located in proximity to the mobile terminal and FIG. 40(b) shows an embodiment in which no POS terminal is located in proximity to the mobile terminal.

Referring to FIG. 40(a), the mobile terminal may preferentially output payment related information of a coupon object 4010 when the POS terminal 10 is located in proximity thereto. For example, the payment related information may be barcode information. Here, the mobile terminal may display an indicator 4011 on the payment related information. In this regard, the mobile terminal may sense an input signal 4020a in a state in which the coupon object 4010 is displayed on the display. The input signal 4020a may correspond to an input of rotating the stem in one direction. In this case, the mobile terminal may zoom in the payment related information 4030 and display the same on the display according to the input signal 4020a.

Referring to FIG. 40(b), the mobile terminal may preferentially output text information of the coupon object 4010 instead of the payment related information when no POS terminal is located in proximity thereto. For example, the text information may include the coupon name, places in which the coupon can be used, a coupon expiration date, and the like included in the coupon object 4010. Here, the mobile terminal may display an indicator 4012 on the text information. In this regard, the mobile terminal may sense an input signal 4020b in a state in which the coupon object 4010 is displayed on the display. The input signal 4020b may correspond to an input of rotating the stem in one direction. In this case, the mobile terminal may zoom in the text information 4040 and display the same on the display according to the input signal 4020b.

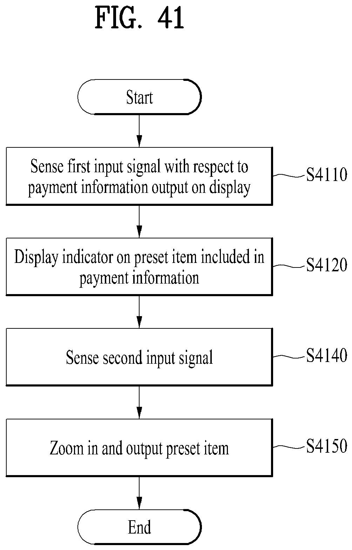

FIG. 41 is a flowchart illustrating a method of controlling the watch-type mobile terminal related to the present invention. Each step of FIG. 41 which will be described below may be controlled by the controller of the mobile terminal shown in FIG. 1.

The mobile terminal may sense a first input signal with respect to payment information displayed on the display (S4110). Here, the payment information may include receipt objects, coupon objects and card objects. The first input signal may correspond to touch input wherein at least one of the area and pressure sensed in the display exceeds a preset value. For example, the first input signal may correspond to the second touch described above with reference to FIGS. 10 and 11.

Subsequently, the mobile terminal may display an indicator on a preset item included in the payment information according to the first input signal (S4120). For example, when the payment information is a receipt object, the preset item may be an amount item. When the payment information is a coupon object, the preset item may be a barcode. When the payment information is a card object, the preset item may be card numbers.

Then, the mobile terminal may sense a second input signal (S4130). Here, the second input signal may correspond to a signal of rotating the stem provided to the body of the mobile terminal.

In this case, the mobile terminal may zoom in the preset item and display the same according to the second input signal (S4140). In this regard, the mobile terminal can provide a zoom-in view of the preset item to the user as described above with reference to FIGS. 15, 18, 20 and 21.

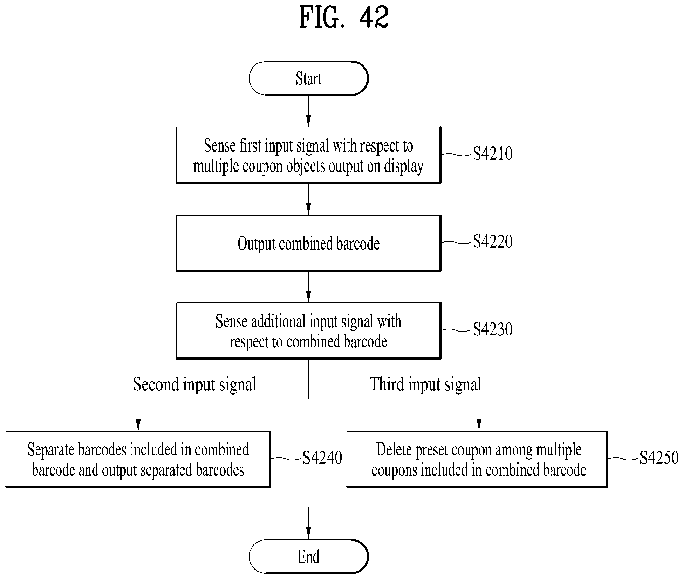

FIG. 42 is a flowchart illustrating a method of controlling the watch-type mobile terminal related to the present invention. Each step of FIG. 42 which will be described below may be controlled by the controller of the mobile terminal shown in FIG. 1.

The mobile terminal may sense a first input signal with respect to a plurality of coupon objects displayed on the display (S4210). Here, the first input signal may include touch input applied to the display, push input applied to the stem, and the like, as described above with reference to FIGS. 24, 26 and 30.

Subsequently, the mobile terminal may output a combined barcode according to the first input signal (S4220). As described above with reference to FIG. 24, the combined barcode may be displayed in the form of a QR code, for example. Alternatively, as described above with reference to FIGS. 30, 33 and 35, the combined barcode may include a plurality of barcodes which is displayed in an overlay manner in the same area and combined and a plurality of barcodes which is displayed in a row and combined.

Then, the mobile terminal may sense an additional input signal applied to the combined barcode (S4230).

When a second input signal is sensed in step S4230, the mobile terminal may separate the barcodes included in the combined barcode and display the separated barcodes (S4240).

When a third input signal is sensed in step S4230, the mobile terminal may delete a preset coupon from among the coupons corresponding to the combined barcode (S4250). For example, the preset coupon may correspond to a coupon which has expired, a coupon having a low discount rate or a coupon which has been used, as described above with reference to FIG. 32 and 35.

The present invention may be implemented as computer-readable code in a recording medium in which programs are recorded. A computer-readable medium includes all kinds of recording devices capable of storing data readable by a computer system. Examples of the computer-readable medium may include a hard disk drive (HDD), a solid state drive (SSD), a silicon disk drive (SDD), a ROM, a RAM, a CD-ROM, magnetic tapes, floppy disks, optical data storage devices, and the like and also include a carrier-wave type implementation such as transmission over the Internet. Furthermore, the computer may include the controller 180 of the mobile terminal. Therefore, the above embodiments are to be construed in all aspects as illustrative and not restrictive. The scope of the invention should be determined by the appended claims and their legal equivalents, not by the above description, and all changes coming within the meaning and equivalency range of the appended claims are intended to be embraced therein.

### Industrial Applicability

The present invention is industrially applicable to mobile terminals and is repeatedly applicable thereto.

## Claims

1. A watch-type mobile terminal comprising:
a display;
a sensing unit; and
a controller,
wherein the controller is configured:
to sense a first input signal with respect to payment information output on the display, the first input signal being a touch input wherein at least one of an area and a pressure sensed in the display exceeds a predetermined value;
to display an indicator on a preset item included in the payment information according to the first input signal; and
to zoom in and output the predetermined item according to a second input signal.

2. The watch-type mobile terminal according to claim 1, wherein the second input signal is a signal of rotating a stem included in the body of the watch-type mobile terminal.

3. The watch-type mobile terminal according to claim 1, wherein the controller is further configured to sequentially output a plurality of items according to the second input signal when the preset item includes the plurality of items.

4. The watch-type mobile terminal according to claim 1, wherein the payment information corresponds to a receipt object indicating the details of payment.

5. The watch-type mobile terminal according to claim 4, wherein the controller is further configured to display an indicator on amount information included in the receipt object according to the first input signal and to zoom in and output the amount information according to the second input signal.

6. The watch-type mobile terminal according to claim 1, wherein the payment information corresponds to a coupon object available for payment.

7. The watch-type mobile terminal according to claim 6, wherein the controller is further configured to display an indicator on barcode information included in the coupon object according to the first input signal and to zoom in and output the barcode information according to the second input signal.

8. The watch-type mobile terminal according to claim 6, further comprising a communication unit configured to transmit/receive signals to an external device,
wherein the controller is further configured to output coupon objects related to the external device on the display when a payment signal is received from the external device, the external device corresponding to POS.

9. The watch-type mobile terminal according to claim 8, wherein the controller is further configured to provide a vibration notification indicating the number of coupon objects related to the external device when the payment information is received from the external device.

10. The watch-type mobile terminal according to claim 8, wherein the controller transmits a signal for requesting a coupon object necessary for payment to the external device, the external device corresponding to a mobile terminal of another user.

11. The watch-type mobile terminal according to claim 1, wherein the payment information corresponds to a credit card object for payment.

12. The watch-type mobile terminal according to claim 11, wherein the controller is further configured to output a pop-up menu corresponding to the credit card object according to the first input signal.

13. The watch-type mobile terminal according to claim 1, wherein the controller is further configured to zoom in and output serial numbers included in the credit card object according to the second input signal.

14. A watch-type mobile terminal comprising:
a display;
a sensing unit; and
a controller,
wherein the controller is configured:
to output a plurality of coupon objects on the display; and
to combine barcodes included in the plurality of coupon objects to output a combined barcode according to a first input signal applied to the plurality of coupon objects.

15. The watch-type mobile terminal according to claim 14, wherein the controller is further configured to combine the barcodes included in the plurality of coupon objects and to output the combined barcodes as a quick response (QR) code according to the first input signal applied to the plurality of coupon objects.

16. The watch-type mobile terminal according to claim 14, wherein the controller is further configured to sense a second input signal applied to the combined barcode and to separate the barcodes included in the combined barcode according to the second input signal.

17. The watch-type mobile terminal according to claim 14, wherein the controller is further configured to delete a preset coupon object among the plurality of coupon objects corresponding to the combined barcode when a third input signal is sensed in a state in which the combined barcode is output.

18. The watch-type mobile terminal according to claim 17, wherein the preset coupon object includes a coupon which has expired, a coupon having a low discount rate and a coupon which has been used.

19. The watch-type mobile terminal according to claim 14, wherein the controller is further configured to output a barcode of a recommended coupon object among the plurality of coupon objects corresponding to the combined barcode when a fourth input signal is sensed in a state in which the combined barcode is output.

20. The watch-type mobile terminal according to claim 14, wherein the combined barcode corresponds to the barcodes displayed in an overlay manner in the same area or the barcodes arranged in a row.
